# EUROPEAN PATENT SPECIFICATION

(11) **EP 4 248 638 B1**
(45) Date of publication and mention of the grant of the patent: **11.03.2026**
(21) Application number: 20828630.2
(22) Date of filing: 08.12.2020
(51) Int. Cl.: H04M 3/493, H04M 1/72469

(54) **SELECTABLE CONTROLS FOR INTERACTIVE VOICE RESPONSE SYSTEMS**
AUSWÄHLBARE STEUERUNGEN FÜR INTERAKTIVE SPRACHANTWORTSYSTEME
COMMANDES SÉLECTIONNABLES POUR SYSTÈMES DE RÉPONSE VOCALE INTERACTIVE

(43) Date of publication of application: 27.09.2023
(73) Proprietor: Google LLC, Mountain View, CA 94043 (US)
(72) Inventor: BARBELLO, Brandon Charles, Mountain View, California 94043 (US); ZACK, Shenaz, Mountain View, California 94043 (US); WANTLAND, Tim, Mountain View, California 94043 (US); JEDRZEJOWICZ, Jan Piotr, Mountain View, California 94043 (US)
(74) Representative: Colonna, Matthew Oliver
(86) International application number: PCT/US2020/063708
(87) International publication number: WO 2022/125061

(56) References cited:
- US-A1- 2009 207 980
- US-A1- 2009 207 980
- US-A1- 2010 057 456
- US-A1- 2010 057 456
- US-A1- 2011 103 559
- US-A1- 2016 227 034
- US-A1- 2016 227 034

## Description

### BACKGROUND

Interactive voice response (IVR) systems, or phone trees, allow callers to interact with a computer-operated phone system through voice input or a numeric keypad. For example, telephone systems can use IVR for mobile purchases, banking payments, services, retail orders, utility services, travel information, and weather reporting. IVR systems generally use a series of audio menus to identify and segment callers, which include multiple options that may be difficult for callers to understand, navigate, or remember. US 2009/207980 A1 discloses an interactive voice response mapping system used in a transaction between a waiting party and a queuing party. US 2010/057456 A1 discloses a system that includes an interrogation system for interrogating a voice response unit (VRU) and gathering a hierarchical set of options associated with the VRU. US 2016/227034 A1 as well as US2011103559A1 both disclose a system for interactive voice response system crawling.

### SUMMARY

This document describes systems and techniques to provide selectable controls for IVR systems. The described systems and techniques can determine whether audio data associated with a voice or video call between a user of a computing device and a third party includes multiple selectable options. The third party audibly provides the selectable options during the call. In response to determining that the audio data includes the selectable options, the computing device can determine a text description of the multiple selectable options. The described systems and techniques can then display two or more selectable controls on a display. The user can select a selectable control to indicate a selected option of the multiple selectable options. In this way, the described systems and techniques can improve user experience with voice calls and video calls by making IVR systems easier to navigate and understand.

The described systems and techniques can improve the ease with which a user may interact with an IVR system, such as users with certain communication disorders. As an example, the described systems and techniques can allow a user who is hard of hearing and may otherwise find it difficult or impossible to interact with an IVR system to provide a response to the IVR system. Similarly, the described systems and techniques can allow a user with a speech impediment and who may otherwise find it difficult or impossible to interact with an IVR system to provide a response to the IVR system. The described systems and techniques may also assist a user with a short-term memory impairment who cannot otherwise remember a list of options provided by an IVR system to provide a response to the IVR system. The described systems and techniques may also improve the ease with which a user may interact with an IVR system where it would otherwise have been difficult for the user to comprehend options provided in a voice or video call, for example when the audio is distorted or the user is distracted by an ambient noise not originating from the voice or video call.

For example, a computing device obtains audio data output from a communication application executing on the computing device. The audio data includes audible parts of a voice call or a video call between a user of the computing device and a third party. The computing device determines whether the audio data includes two or more selectable options using the audible parts of the voice call or the video call. The third party audibly provides the two or more selectable options during the voice call or the video call. Responsive to determining that the audio data includes the two or more selectable options, the computing device determines a text description of the two or more selectable options, which provides a transcription of at least a portion of the two or more selectable options. The computing device then displays two or more selectable controls. The two or more selectable controls can be selectable to indicate a selected option of the two or more selectable options to the third party. Each of the two or more selectable controls provides the text description of a respective selectable option.

This document also describes other methods, configurations, and systems to provide selectable controls for IVR systems.

This Summary is provided to introduce simplified concepts for providing selectable controls for IVR systems, further described in the Detailed Description and Drawings. This Summary is not intended to identify essential features of the claimed subject matter, nor is it intended for use in determining the scope of the claimed subject matter. The scope of the claimed subject matter is entirely set out by the independent claims. Preferred embodiments are set out by the dependent claims.

### BRIEF DESCRIPTION OF THE DRAWINGS

The details of one or more aspects of visual user interfaces for providing selectable controls for IVR systems are described in this document with reference to the following drawings. The same numbers are used throughout multiple drawings to reference like features and components.
FIG. 1 illustrates an example environment that includes a computing device that can provide selectable controls for IVR systems.
FIG. 2 illustrates an example device diagram of a computing device that can provide visual user interfaces for interactive voice response systems.
FIG. 3 illustrates an example diagram of a machine-learned model of a computing device that can provide text descriptions for selectable controls in response to an IVR system.
FIG. 4 illustrates a flow chart of example operations of a computing device that can provide selectable controls and user data related to voice calls and video calls.
FIG. 5 illustrates example operations to provide selectable controls for IVR systems.
FIGs. 6A-6D illustrate example user interfaces of a computing device to assist users with voice calls and video calls.
FIGs. 7A-7C illustrate other example user interfaces of a computing device to assist users with voice calls and video calls.
FIGs. 8A-8D illustrate other example user interfaces of a computing device to assist users with voice calls and video calls.

### DETAILED DESCRIPTION

### OVERVIEW

This document describes techniques and systems to provide selectable controls on a computing device for IVR systems. As noted above, IVR systems allow callers to interact with a phone system through voice input or dual-tone multi-frequency tones (DTMFs) generated by a numeric keypad. IVR systems can provide a series of menus that each include multiple selectable options. The audio menus can be confusing and difficult for callers to navigate. For example, some IVR systems provide many options in each menu or detailed options that can be difficult to recall. A user who is hard of hearing may find it difficult or impossible to hear the options and so may not normally be able to provide a response to select an option. A user with a speech impediment may not be able to provide a vocal response to the options. A user with a short-term memory impairment may not be able to remember the options provided by the IVR system when it is time to provide a response.

Consider a smartphone with a communication application that allows users to make voice calls or video calls. For example, a user can use the communication application to call a medical office. The medical office can use an IVR system to direct callers to appropriate information, personnel, or departments. The first audio menu can ask the user to select an appropriate language. Upon selecting a language by audibly communicating or pressing a number associated with the preferred language, the IVR system can present another menu of options. For example, the IVR system can direct the caller to additional menus related to billing, scheduling, medical questions, service providers, and personnel questions.

Communication applications generally do not assist users in navigating IVR systems. Instead, communication applications and computing devices usually require a user to recall the menu options and navigate the audio menus using voice input or the numeric keypad.

The described techniques and systems can help users navigate IVR systems by providing selectable controls associated with the selectable options. In particular, the described techniques and systems can obtain audio data from a voice call or a video call and determine whether the conversation includes two or more selectable options. In response to determining that the conversation includes selectable options, the described techniques and systems can determine a text description associated with the selectable options.

Consider the medical office scenario described above. The smartphone can listen to the voice call and determine whether the medical office audibly provides an IVR menu of selectable options. In response to determining that the medical office audibly provided selectable options, the described systems and techniques can determine a text description of the selectable options and display selectable controls on a smartphone display. Each of the selectable controls provides the text description of a respective selectable option. By selecting one of the selectable controls, the user can cause the smartphone to indicate a selected option. In this way, the described techniques and systems provide a user-friendly experience for smartphone users to easily navigate IVR systems, and can allow users who may not normally be able to interact with an IVR system to interact with such a system. The described techniques and systems are compatible with a variety of different, existing IVR systems.

As a non-limiting example, a computing device can obtain audio data output from a communication application. The audio data includes audible parts of a voice call or video call between a user of the computing device and a third party. The computing device determines, using the audible parts, whether the audio data includes two or more selectable options, which are audibly provided by the third party during the voice call or the video call. Responsive to determining that the audio data includes the two or more selectable options, the computing device determines a text description of the two or more selectable options. The text description includes a transcription of at least a portion of the two or more selectable options. The computing device then displays two or more selectable controls on a display of the computing device. The two or more selectable controls provide the text description of the respective selectable options. The user can select a selectable control to indicate a selected option from among the two or more selectable options to the third party.

The computing device may only use the information from the audio data after the computing device receives explicit permission from a user of the computing device. For example, in situations discussed above in which the computing device may collect audio data from voice and video calls, individual users may be provided with an opportunity to provide input to control whether programs or features of the computing device can collect and make use of the information. The individual users may further be provided with an opportunity to control what the programs or features can or cannot do with the information.

This example is just one illustration of how the described selectable controls for IVR systems can improve user experience on a computing device and allow users with communication disorders to interact with an IVR system. Other examples and implementations are described throughout this document. This document now describes additional example configurations, components, and methods to provide selectable controls for IVR systems on a computing device.

### EXAMPLE ENVIRONMENT

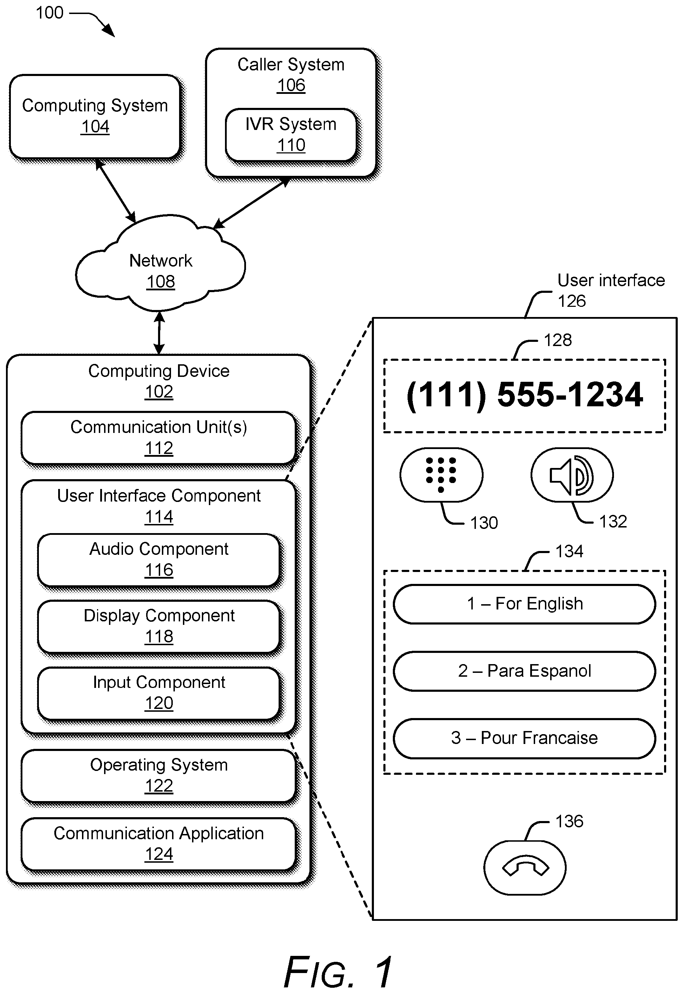

FIG. 1 illustrates an example environment 100 that includes an example computing device 102 that can provide selectable controls for IVR systems. In addition to the computing device 102, the environment 100 includes a computing system 104 and a caller system 106. The computing device 102, the computing system 104, and the caller system 106 are communicatively coupled to network 108.

Although operations of the computing device 102 are described as being performed locally, in some examples, the operations may be performed by multiple computing devices and systems (e.g., the computing system 104), including additional computing devices and systems beyond those shown in FIG. 1. For example, the computing system 104, the caller system 106, or any other device or system communicatively coupled to the network 108, may perform some or all of the functionality of the computing device 102, or vice versa.

The computing system 104 represents any combination of one or more computers, mainframes, servers, cloud computing systems, or other types of remote computing systems capable of exchanging information with the computing device 102 via the network 108. The computing system 104 can store, or provide access to, additional processors, stored data, or other computing resources needed by computing device 102 to implement the described systems and techniques for providing selectable controls for IVR systems on the computing device 102.

The caller system 106 can execute an IVR system 110 to transmit and receive telephony data with the computing device 102 via the network 108. For example, the caller system 106 can be a mobile telephone, landline telephone, laptop computer, workstation at a telephone call center, or other computing device configured to present the IVR system 110 to a caller. The caller system 106 can also represent any combination of computers, computing devices, mainframes, servers, cloud computing systems, or other types of remote computing systems capable of communicating information via network 108 to implement a voice call or a video call between the caller system 106 and the computing device 102.

The network 108 represents any public or private communications network for transmitting data (e.g., voice communications, video communications, data packages) between computing systems, servers, and computing devices. For example, the network 108 can include a public switched telephone network (PSTN), a wireless network (e.g., a cellular network, a wireless local area network (WLAN)), a wired network (e.g., a local area network (LAN), a wide area network (WAN)), an Internet Protocol (IP) telephony network (e.g., a voice-over-IP (VoIP) network), or any combination thereof. The network 108 may include network hubs, network switches, network routers, or any other network equipment that is operatively inter-coupled. The computing device 102, the computing system 104, and the caller system 106 may transmit and receive data across the network 108 using any suitable communication techniques. The computing device 102, the computing system 104, and the caller system 106 can be operatively coupled to the network 108 using respective network links.

The computing device 102 represents any suitable computing device capable of providing selectable controls for IVR systems. For example, the computing device 102 may be a smartphone on which a user provides inputs to make or accept voice calls or video calls with a caller entity *(e.g.,* the caller system 106).

The computing device 102 includes one or more communication units 112. The communication units 112 allow the computing device 102 to communicate over wireless or wired networks, including the network 108. For example, the communication units 112 can include transceivers for cellular phone communication or network data communication. The computing device 102 can tune the communication units 112 and supporting circuitry (e.g., antennas, front-end modules, amplifiers) to one or more frequency bands defined by various communication standards.

The computing device 102 includes a user interface component 114, which includes an audio component 116, a display component 118, and an input component 120. The computing device 102 also includes an operating system 122 and a communication application 124. These components and other components (not illustrated) of the computing device 102 are operatively coupled in various ways, including wired and wireless busses and links. The computing device 102 may include additional components and interfaces omitted from FIG. 1 for the sake of clarity.

The user interface component 114 manages input and output to a user interface 126 controlled by the operating system 122 or applications executing on the computing device 102. For example, the communication application 124 can cause the user interface 126 to display various user interface elements, including input controls, navigational components, informational components, or a combination thereof.

As described above, the user interface component 114 can include the audio component 116, the display component 118, and the input component 120. The audio component 116, the display component 118, and the input component 120 can be separate or integrated as a single component. The audio component 116 *(e.g.,* a single speaker or multiple speakers) can receive an audio signal as input and convert the audio signal to audible sound. The display component 118 can display visual elements on the user interface 126. The display component 118 can include any suitable display technology, including light-emitting diode (LED), organic light-emitting diode (OLED), and liquid crystal display (LCD) technologies. The input component 120 may be a microphone, presence-sensitive device, touch screen, mouse, keyboard, or another type of component configured to receive user input.

The operating system 122 generally controls the computing device 102, including the communication units 112, the user interface component 114, and other peripherals. For example, the operating system 122 can manage hardware and software resources of the computing device 102 and provide common services for applications. As another example, the operating system 122 can control task scheduling. The operating system 122 and the applications are generally executable by one or more processors (*e.g.*, a system on chip (SoC), a central processing unit (CPU)) to enable communications and user interaction with the computing device 102. The operating system 122 generally provides for user interaction through the user interface 126.

The operating system 122 also provides an execution environment for applications, for example the communication application 124. The communication application 124 allows the computing device 102 to make and receive voice calls and video calls with callers, including the caller system 106.

During a voice call or a video call, the communication application 124 can cause the user interface 126 to display a caller box 128, a numeric-keypad icon 130, a speakerphone icon 132, selectable controls 134, and an end-call icon 136. The caller box 128 can indicate the name and telephone number of the caller *(e.g.,* the caller system 106). The numeric-keypad icon 130 is a selectable icon that, when selected, causes a numeric keypad to be displayed on the user interface 126. The speakerphone icon 132 is a selectable icon that, when selected, causes the computing device 102 to use a speakerphone functionality for the voice call or video call.

The selectable controls 134 are selectable by a user of the computing device 102 to perform a particular operation or function. In the illustrated example, the selectable controls 134 are selectable by the user to indicate to the caller system 106 of a selected option from selectable options provided by the IVR system 110. The selectable controls 134 can include buttons, toggles, selectable text, sliders, checkboxes, or icons. The end-call icon 136 allows a user of the computing device 102 to terminate a voice call or a video call.

The operating system 122 can correlate detected inputs at the input component 120 to elements of the user interface 126. In response to receiving an input at the input component 120 *(e.g.,* a tap), the operating system 122 or the communication application 124 can receive information from the user interface component 114 about the detected input. The operating system 122 or the communication application 124 may perform a function or operation in response to the detected input. For example, the operating system 122 may determine that the input corresponds to the user selecting one of the selectable controls 134 and, in response, send an indication of the corresponding selected option to the caller system 106.

In operation, the operating system 122 or the communication application 124 can automatically generate the selectable controls 134 that correspond to selectable options of the IVR system 110 provided by the caller system 106. The computing device 102 can obtain audio data from an audio mixer or sound engine of the operating system 122. The audio data generally includes the audible parts of the voice call or the video call, including the IVR options provided by the IVR system 110.

### EXAMPLE CONFIGURATIONS

This section illustrates example configurations of systems to provide selectable controls for IVR systems, which may occur separately or together in whole or in part. This section describes various example configurations, each described in relation to a drawing for ease of reading.

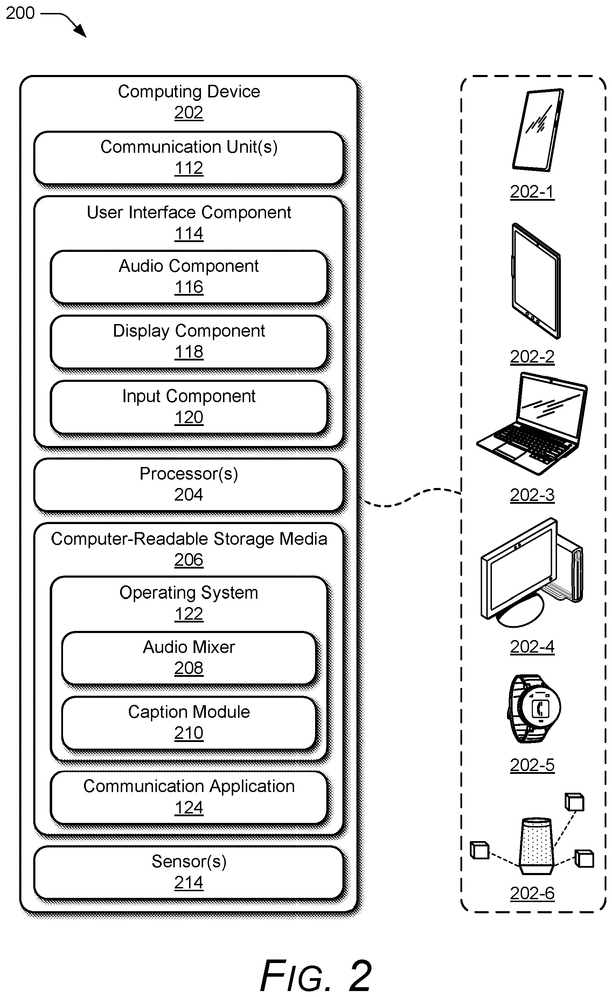

FIG. 2 illustrates an example device diagram 200 of a computing device 202 that can provide selectable controls for IVR systems (e.g., the IVR system 110). The computing device 202 is an example of the computing device 102, with some additional detail.

As shown in FIG. 2, the computing device 202 may be a smartphone 202-1, a tablet device 202-2, a laptop computer 202-3, a desktop computer 202-4, a computerized watch 202-5 or other wearable device, a voice-assistant system 202-6, a smart display system, or a computing system installed in a vehicle.

In addition to the communication units 112 and the user interface component 114, the computing device 202 includes one or more processors 204 and computer-readable storage media (CRM) 206.

The processors 204 may include any combination of one or more controllers, microcontrollers, processors, microprocessors, hardware processors, hardware processing units, digital-signal-processors, graphics processors, graphics processing units, and the like. For example, the processor 204 can be an integrated processor and memory subsystem, including, as non-limiting examples, an SoC, a CPU, a graphics processing unit, or a tensor processing unit. An SoC generally integrates many of the components of the computing device 202 into a single device, including a central processing unit, a memory, and input and output ports. A CPU generally executes commands and processes needed for the computing device 202. A graphics processing unit performs operations to display graphics of the computing device 202 and can perform other specific computational tasks. The tensor processing unit generally performs symbolic match operations in neural-network machine-learning applications. The processors 204 can include a single core or multiple cores.

The CRM 206 can provide the computing device 202 with persistent and non-persistent storage of executable instructions (e.g., firmware, recovery firmware, software, applications, modules, programs, functions) and data (e.g., user data, operational data) to support the execution of the executable instructions. For example, the CRM 206 includes instructions that, when executed by the processors 204, execute the operating system 122 and the communication application 124. Examples of the CRM 206 include volatile memory and non-volatile memory, fixed and removable media devices, and any suitable memory device or electronic data storage that maintains executable instructions and supporting data. The CRM 206 can include various implementations of random-access memory (RAM), static RAM (SRAM), dynamic RAM (DRAM), non-volatile RAM (NVRAM), read-only memory (ROM), flash memory, and other storage memory types in various memory device configurations. The CRM 206 excludes propagating signals. The CRM 206 can be a solid-state drive (SSD) or a hard disk drive (HDD).

The operating system 122 can also include or control an audio mixer 208 and caption module 210. The audio mixer 208 and the caption module 210 can be specialized hardware components, software components, or a combination thereof. In other examples, the audio mixer 208 and the caption module 210 are separate from the operating system 122 *(e.g.,* as a system plug-in or additional add-on service locally installed on the computing device 202).

The audio mixer 208 can obtain and consolidate audio data generated by applications, including the communication application 124, executing on the computing device 202. The audio mixer 208 obtains audio streams from applications, such as the communication application 124, and generates audio output signals that reproduce the sounds encoded in the audio streams when combined and output from the audio component 116. The audio mixer 208 may adjust the audio signals in other ways, for example, controlling focus, intent, and volume. The audio mixer provides an interface between the application source that generates the content and the audio component 116 that creates sounds from the content. The audio mixer 208 can manage raw audio data, analyze it, and direct audio signals to be output by the audio component 116 or sent, via the communication units 112, to another computing device (*e.g.,* the caller system 106).

The caption module 210 is configured to analyze audio data, in raw form, as received *(e.g.,* as a byte stream) by the audio mixer 208. For example, the caption module 210 can perform speech recognition on the audio data to determine whether the audio data includes selectable options of an IVR system, a request for user information, or communicated information related to a call context. Rather than process each audio signal, the caption module 210 can identify individual, pre-mixed audio data streams suitable for captioning. For example, the caption module 210 can automatically caption spoken audio data but not notification or sonification audio data (e.g., system beeps, rings). The caption module 210 may apply a filter to the byte streams received by the audio mixer 208 to identify the audio data suitable for captioning. The caption module 210 can use a machine-learned model to determine audio data descriptions from audible parts of a voice call or a video call.

Rather than captioning all the audio data, the operating system 122 can use metadata to focus the captioning on specific portions of the audio data. For example, the caption module 210 can focus on audio data related to providing selectable controls for IVR systems, user information in response to a request, or communicated information related to a call context. In other words, the operating system 122 can identify "captionable" audio data based on metadata and refrain from captioning all audio data. Some metadata examples include a context indicator specifying the nature of a voice call or a video call. The audio mixer may use the context indicator to control routing, focus, and captioning decisions regarding the audio data.

Some computing devices can transcribe a voice call or a video call. The transcription, however, generally provides a direct transcription of the audible parts of the call and cannot determine whether the conversation includes selectable options of an IVR system, a request for user information, or communicated information related to the call context. The user still must read the transcript to determine the desired menu option, the requested user information, or the communicated information. Thus, even if the computing device provides a transcription, the user may still find it challenging to navigate the IVR system and select the desired option. In contrast, the described systems and techniques assist users in navigating IVR systems, provide user information in response to a request, or manage communicated information from voice calls and video calls by displaying selectable controls and message elements with the relevant information.

The computing device 202 also includes one or more sensors 214. The sensors 214 obtain contextual information indicative of a physical operating environment of the computing device 202 or characteristics of the computing device 202 while functioning in a physical operating environment. For example, the caption module 210 can use this contextual information as metadata to focus the audio data processing. Examples of the sensors 214 include movement sensors, temperature sensors, position sensors, proximity sensors, ambient light sensors, moisture sensors, pressure sensors, and the like.

In operation, the operating system 122 or the caption module 210 determines whether the audio data is for captioning. For example, the caption module 210 can determine whether the audio data includes selectable options of an IVR system, a request for user information, or communicated information related to the call context. Responsive to determining that the audio data is for captioning, the operating system 122 determines the audio data description. For example, the operating system 122 may execute a machine-learned model *(e.g.,* an end-to-end Recurrent-Neural-Network-Transducer Automatic Speech-Recognition Model) trained to generate descriptions of audible parts of voice calls or video calls. The machine-learned model can be any type of model suitable for learning descriptions of sounds, including transcriptions for spoken audio. The machine-learned model used by the operating system 122 can be smaller and less complex than other machine-learned models because it only needs to be trained to identify audible parts of voice calls and video calls. The machine-learned model can avoid processing all audio data sent to the audio mixer 208. In this way, the described systems and techniques can avoid using remote processing resources (e.g., a machine-learned model at a remote computing device) to avoid unnecessary privacy risks and potential processing latencies.

By relying on original audio data instead of audio signals generated by the audio component 116, the machine-leamed model can generate descriptions that more-accurately represent the audible parts of voice calls and video calls. By determining whether audio data is for captioning before using the machine-learned model, the operating system 122 can avoid wasting resources overanalyzing all audio data output by the communication application 124. This captioning determination enables the computing device 202 to execute a more-efficient, smaller, and less-complex machine-learned model. In this way, the machine-leamed model can perform automatic speech-recognition and automatic sound classification techniques locally to maintain privacy.

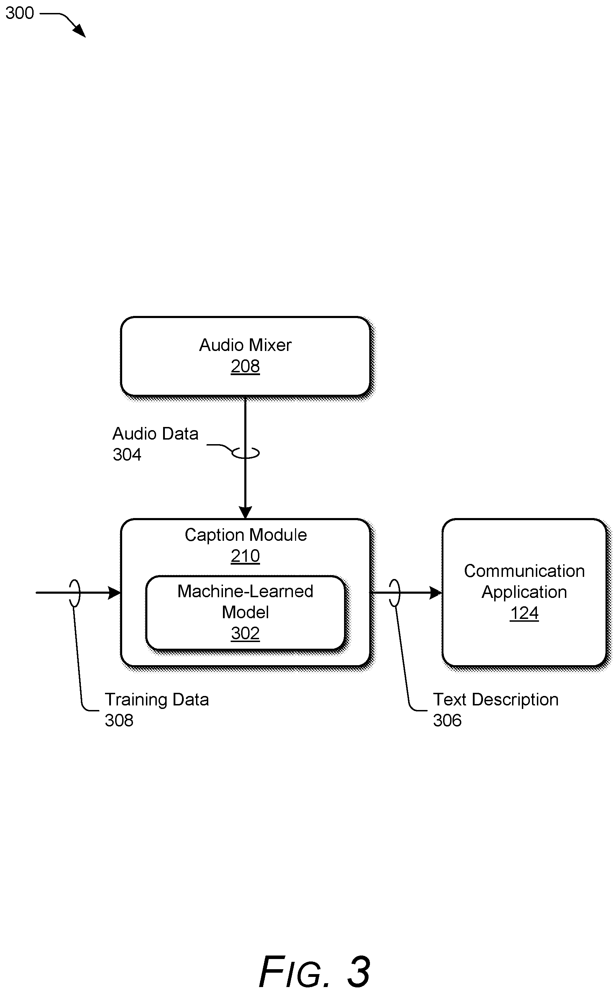

The operating system 122 receives the machine-learned model description and displays it using the display component 118. The display component 118 can also display other visual elements (e.g., selectable controls that allow the user to perform an action on the computing device 202) related to the descriptions. For example, the operating system 122 can present the visual elements (e.g., the selectable controls 134) as part of the user interface 126. A description can include transcriptions or a summary of the audible parts (e.g., the phone conversation) of voice calls and video calls. The descriptions can also identify a context for the audible parts of the audio data. The details and operation of the machine-leamed model are described in greater detail with respect to FIG. 3.

FIG. 3 illustrates an example diagram 300 of a machine-learned model 302 of the computing device 202 that can provide text descriptions for selectable controls in response to an IVR system. In other implementations, the computing device 202 can be the computing device 102 of FIG. 1 or a similar computing device.

As illustrated in FIG. 3, the machine-learned model 302 can be part of the caption module 210. The machine-learned model 302 can convert audio data 304 into the text descriptions 306 *(e.g.,* text descriptions of selectable options provided by the IVR system 110) of the audible parts of a voice call or a video call without converting the audio data 304 into sound. The audio data 304 can include different types, forms, or variations of data from the communication application 124. For example, the audio data 304 can include raw, pre-mixed audio byte stream data or processed byte stream data. The machine-learned model 302 can include multiple machine-learned models combined into a single model that provides the text descriptions 306 in response to the audio data 304.

Applications, including the communication application 124, can use the machine-learned model 302 to process the audio data 304 into the text descriptions 306. For example, the communication application 124 can communicate through the operating system 122 or the caption module 210 with the machine-learned model 302 using an application programming interface (API) *(e.g.,* a public API across all applications). In some implementations, the machine-learned model 302 can process the audio data 304 within a secure section or enclave of the operating system 122 or the CRM 206 to ensure user privacy and security.

The machine-learned model 302 can make inferences. In particular, the machine-learned model 302 can be trained to receive the audio data 304 as an input and provide, as output data, the text descriptions 306 of the audible parts of a call. Through performing inference using the machine-learned model 302, the caption module 210 can process the audio data 304 locally. The machine-learned model 302 can also perform classification, regression, clustering, anomaly detection, recommendation generation, and other tasks.

Engineers can train the machine-learned model 302 using supervised learning techniques. For example, engineers can train the machine-learned model 302 using training data 308 (*e.g.*, truth data) that includes examples of descriptions inferred from examples of audio data 304 from a series of voice calls and video calls. The inferences can be manually applied by engineers or other experts, generated through crowd-sourcing, or provided by other techniques (*e.g.*, complex speech-recognition and content-recognition algorithms). The training data 308 can include audio data from voice calls and video calls to the audio data 304. As an example, consider that the audio data 304 includes a voice call with an IVR system used by a medical office. The training data 308 for the machine-learned model 302 can include many audio data files from a broad range of voice calls and video calls with IVR systems. As another example, consider that the audio data 304 includes a voice call with a customer representative of a business. The training data 308 can include many audio data files from a broad range of similar voice calls and video calls. Engineers can also use unsupervised learning techniques to train the machine-learned model 302.

The machine-learned model 302 can be trained at a training computing system and then provided for storage and implementation at one or more computing devices 202. For example, the training computing system can include a model trainer. The training computing system can be included in or separate from the computing device 202 that implements the machine-learned model 302.

Engineers can also train the machine-learned model 302 online or offline. In offline training (e.g., batch learning), engineers train the machine-learned model 302 on the entirety of a static set of the training data 308. In online learning, engineers continuously train the machine-learned model 302 as new training data 308 becomes available (e.g., while the machine-learned model 302 is used on the computing device 202 to perform inference). For example, engineers can initially train the machine-learned model 302 to replicate descriptions applied to audible parts of voice calls and video calls (e.g., captioned IVR systems, captioned telephone conversations). As the machine-learned model 302 infers the text descriptions 306 from the audio data 304, the computing device 202 can feed the text descriptions 306 (and the corresponding portions of the audio data 304) back to the machine-learned model 302 as new training data 308. In this way, the machine-learned model 302 can continuously improve the accuracy of the text descriptions 306. In some implementations, a user of the computing device 202 can provide input to the machine-learned model 302 to flag a particular description as having errors. The computing device 202 can use this flag to train the machine-learned model 302 and improve future predictions.

Engineers or trainers can perform centralized training of multiple machine-learned models 302 (e.g., based on a centrally stored dataset). In other implementations, the trainer or engineer can use decentralized training techniques, including distributed training or federated learning, to train, update, or personalize the machine-learned model 302. The engineer may only use user information to personalize the machine-learned model 302 after receiving explicit permission from a user. For example, in situations in which the computing device 202 may collect user information, individual users may be provided with an opportunity to provide input to control whether programs or features of the machine-learned model 302 can collect and make use of the user information. The individual users may further be provided with an opportunity to control what the programs or features can or cannot do with the user information.

The machine-learned model 302 can be or include one or more artificial neural networks. In such an implementation, the machine-learned model 302 can include a group of connected or non-fully connected nodes (e.g., neurons). Engineers can also organize the machine-learned model 302 into one or more layers (*e.g.*, a deep network). In a deep-network implementation, the machine-learned model 302 can include an input layer, an output layer, and one or more hidden layers positioned between the input layer and the output layer.

The machine-learned model 302 can also include one or more recurrent neural networks. For example, the machine-learned model 302 can be an end-to-end Recurrent-Neural-Network-Transducer Automatic Speech-Recognition Model. Example recurrent neural networks include long short-term memory (LSTM) recurrent neural networks, gated recurrent units, bi-direction recurrent neural networks, continuous-time recurrent neural networks, neural history compressors, echo state networks, Elman networks, Jordan networks, recursive neural networks, Hopfield networks, fully recurrent networks, and sequence-to-sequence configurations.

At least some of the nodes of a recurrent neural network can form a cycle. When configured as a recurrent neural network, the machine-learned model 302 can be especially useful for processing sequential input data *(e.g.,* the audio data 304). For example, a recurrent neural network can pass or retain information from a previous portion of the audio data 304 to a subsequent portion of the audio data 304 using recurrent or directed cyclical node connections.

The audio data 304 can also include time-series data *(e.g.,* sound data versus time). As a recurrent neural network, the machine-learned model 302 can analyze the audio data 304 over time to detect or predict spoken sounds and relevant non-spoken sounds to generate the text descriptions 306 of at least portions of the audio data 304. For example, the sequential sounds from the audio data 304 can indicate spoken words in a sentence (e.g., natural language processing, speech detection, or processing).

The machine-learned model 302 can also include one or more convolutional neural networks. A convolutional neural network can include multiple convolutional layers that perform convolutions over input data using learned filters or kernels. Engineers generally use convolutional neural networks to diagnose vision problems in still images or videos. Engineers can also apply convolutional neural networks to natural language processing of the audio data 304 to generate the text descriptions 306.

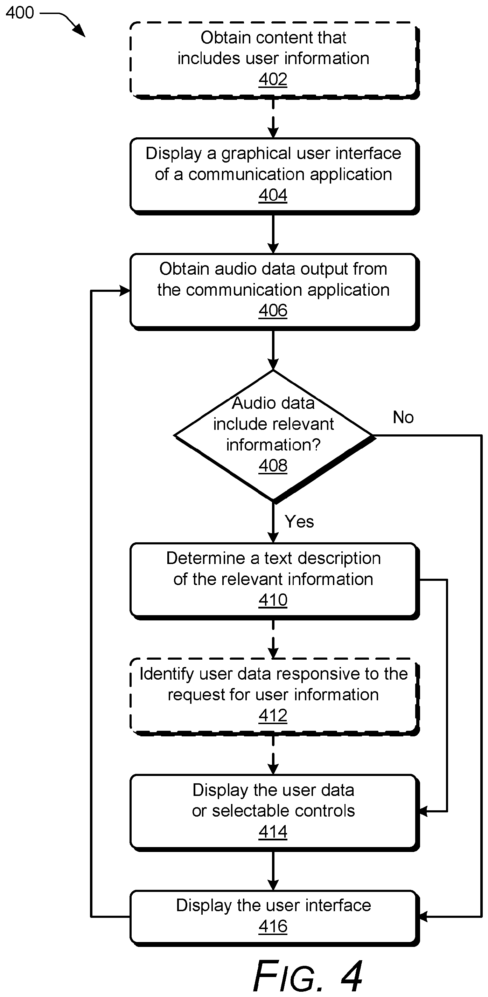

This document describes the operations of the caption module 210 and the machine-learned model 302 in greater detail with respect to FIG. 4.

### EXAMPLE METHODS

FIG. 4 illustrates a flow chart of example operations 400 of a computing device that can provide selectable controls and user data related to voice calls and video calls. The operations 400 are described below in the context of the computing device 202 of FIG. 2. In other implementations, the computing device 202 can be the computing device 102 of FIG. 1 or a similar computing device. The operations 400 may be performed in a different order than that illustrated in FIG. 4 or with additional or fewer operations.

At 402, the computing device optionally obtains content that includes user information of a computing device user. The computing device can use the user information to help the user retrieve requested information or save communicated information related to voice calls and video calls. Before obtaining the user information or performing the described options below, the computing device 202 may obtain consent from the user to use the user information for voice calls and video calls. For example, the computing device 202 may only use user information after receiving explicit consent. The computing device 202 can obtain the user information from user entry into an application on the computing device 202 (e.g., inputting contact information into a user profile, inputting an account number via a third-party application) or learning it from information received in an application *(e.g.,* an account number included in an emailed statement, saved calendar entries).

At 404, the computing device displays a graphical user interface of a communication application. For example, the computing device 202 may direct the display component 118 to present the user interface 126 for the communication application 124 in response to the user making or receiving a voice call or a video call.

At 406, the computing device obtains audio data output from the communication application executing on the computing device. The audio data includes audible parts of a voice call or a video call. For example, the communication application 124 allows a user of the computing device 202 to make and receive voice calls and video calls. The audio mixer 208 obtains the audio data 304 output from the communication application 124 during the voice calls and video calls. The audio data 304 includes audible parts of a voice call or a video call between a user of the computing device 202 and a third party. To provide selectable controls and other information to the user during the voice call or the video call, the caption module 210 can extract the audio data 304 from the audio mixer 208.

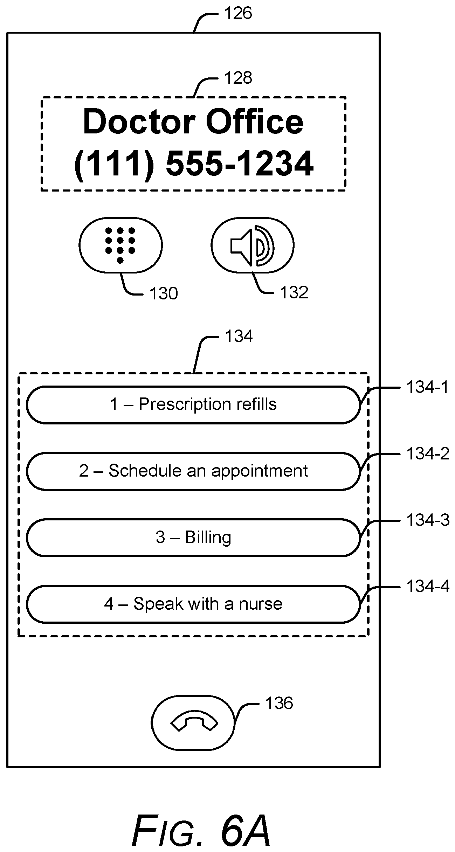

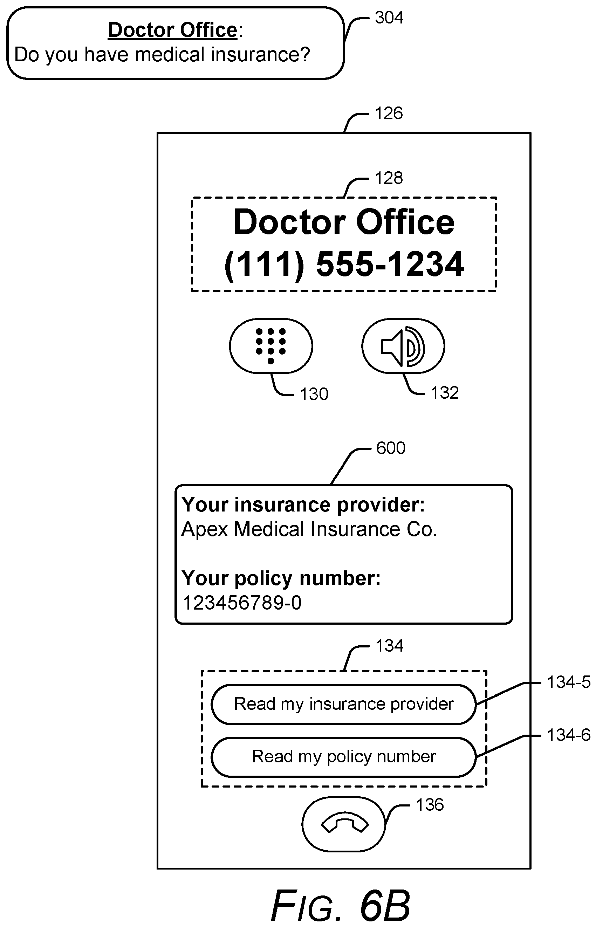

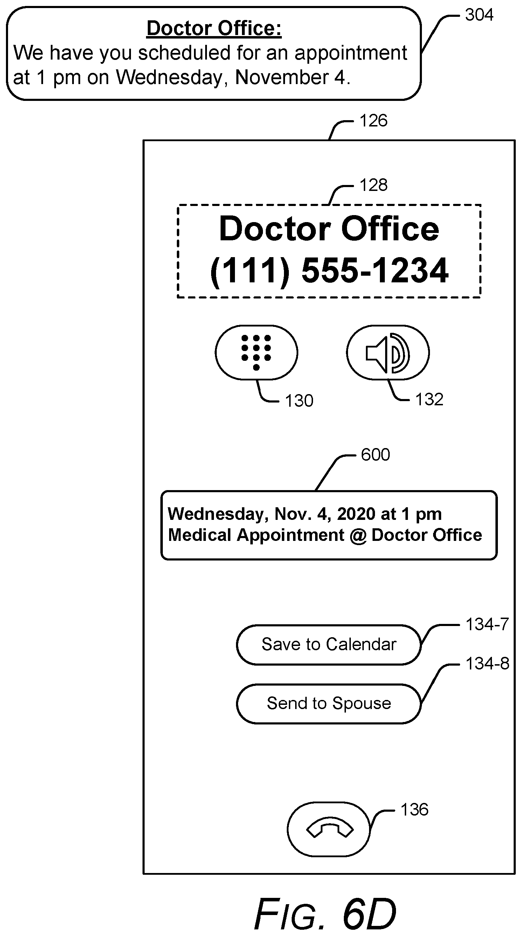

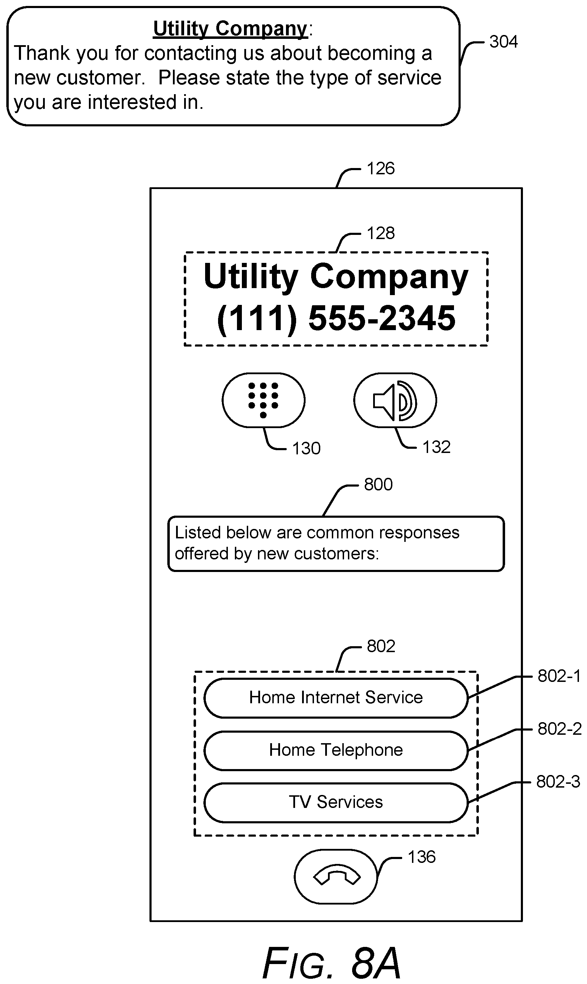

At 408, the computing device determines whether the audio data includes relevant information using the audible parts of the voice call or video call. The relevant information can be two or more selectable options of an IVR system (e.g., phone tree options), a request for user information (e.g., a request for a credit card number, address, account number), or communicated information (e.g., appointment details, contact information, account information). For example, the caption module 210, using the machine-learned model 302, can determine whether the audio data 304 includes relevant information. The relevant information can include two or more selectable options of an IVR system, a request for user information, or communicated information. The user or the third party audibly provides the relevant information during the voice call or video call. The caption module 210 or the machine-learned model 302 may filter out audio data 304 that does not require processing, including notification sounds and background noise. Examples of the machine-learned model 302 determining whether the audio data 304 includes two or more selectable options are illustrated in FIGs. 6A and 8A. Examples of the machine-learned model 302 determining whether the audio data 304 includes a request for user information are illustrated in FIGs. 6B, 6C, 7A, and 8B. Examples of the machine-learned model 302 determining whether the audio data 304 includes communicated information are illustrated in FIGs. 6D, 7B, 7C, and 8C.

If the audio data does not include relevant information, at 416, the computing device displays the user interface for the communication application. For example, in response to determining that the audio data 304 does not include relevant information, the computing device 202 displays the user interface 126 of the communication application 124.

If the computing device determines the audio data includes relevant information, at 410, the computing device determines a text description of the relevant information. The text description transcribes the relevant information. For example, the caption module 210 can use the machine-learned model 302 to perform speech recognition on the audio data 304 and determine a text description 306 of the relevant information. The text description 306 provides a transcription of at least a portion of the two or more selectable options, the request for user information, or the communicated information. Examples of the machine-learned 302 determining the text description 306 of the two or more selectable options are illustrated in FIGs. 6A and 8A. Examples of the machine-learned model 302 determining the text description 306 of the request for user information are illustrated in FIGs. 6B, 6C, 7A, and 8B. Examples of the machine-learned model 302 determining the text description of the communicated information are illustrated in FIGs. 6D, 7B, 7C, and 8C.

The caption module 210 can improve the accuracy of the text description 306 in various ways, including by biasing the machine-learned model 302 based on contexts of the computing device 202. For example, the caption module 210 may bias the machine-learned model 302 based on the identity of the third party to the voice call or video call. Consider the user of the computing device 202 makes a voice call to a medical office. The caption module 210 can bias the machine-learned model 302 using common words from a medical office conversation. In this way, the computing device 202 can improve the text descriptions 306 for this voice call. The caption module 210 can use other contextual information types, including location information derived from a sensor 214 and information from other applications, to bias the machine-learned model 302.

In some implementations, the computing device 202 can translate the text description 306 into another language before displaying it. For example, the caption module 210 may determine from the operating system 122 a preferred language of the user and translate the text description 306 into the preferred language. In this way, a Japanese user can view the text description 306 in Japanese, even if the audio data 304 is in a different language (e.g., Chinese or English).

At 412, the computing device optionally identifies user data responsive to the request for user information. The computing device does not perform this operation if the audio data does not include a request for user information. For example, in response to determining that the third party requested user information, the computing device 202 can identify user data responsive to user information requests. The computing device 202 can retrieve the user data from the CRM 206, the communication application 124, another application on the computing device 202, or remote computing devices associated with the user or the computing device 202. Consider the medical office call scenario above. A receptionist for the medical office can request the user provide her insurance information. In response, the computing device 202 can retrieve the medical insurance provider and user account number from an email previously received by the user and stored on the computing device 202. Examples of the computing device 202 identifying user data response to the request for user information are illustrated in FIGs. 6B, 6C, 7A, and 8B.

The computing device may only use the information responsive to the request for user information after the computing device receives explicit permission from a user of the computing device. For example, in situations discussed above in which the computing device may collect user data, individual users may be provided with an opportunity to provide input to control whether programs or features of the computing device can collect and make use of the user data. The individual users may further be provided with an opportunity to control what the programs or features can or cannot do with the user data.

At 414, the computing device displays the user data or selectable controls. The selectable controls are selectable by the user and include the text description. Suppose the audio data included a request for user information. In that scenario, the computing device can display the identified user data. Suppose the audio data included two or more selectable options of an IVR system. In that scenario, the user can use the selectable controls to indicate to the third party a selected option from the two or more selectable options. Suppose the audio data included communicated information. In that scenario, the user can use the selectable controls to save the communicated information in the computing device, the communication application, or another application. For example, the computing device 202 can cause the display component 118 to display the user data or the selectable controls 134. The display component 118 can provide the user data as a text notification on the user interface 126. Consider the medical office call scenario above. The display component 118 can display the medical insurance provider and user account information as a text box on the user interface 126 during the voice call. The display component 118 can also provide the selectable controls 134. The display component 118 can provide the text description 306 or the requested information as part of a button on the user interface 126 for the communication application 124. Examples of the display component 118 displaying the selectable control 134 are illustrated in FIGs. 6A and 8A. Examples of the display component 118 displaying user data are illustrated in FIGs. 6B, 6C, 7A, and 8B. Examples of the display component 118 displaying selectable control 134 and user data in response to communicated information are illustrated in FIGs. 6D, 7B, 7C, and 8C.

Consider the medical office used the IVR system 110 to direct the voice call to the receptionist. The display component 118 can display selectable controls 134. The selectable controls 134 provide a respective text description 318 of two or more selectable options provided by the IVR system 110. The user can use the selectable controls 134 to indicate to the medical office of a selected option from the two or more selectable options.

Also, consider the user scheduling an appointment with the medical office. The display component 118 can display the selectable control 134. The selectable control 134 includes the text description of the appointment. The user can use the selectable control 134 to save the appointment details to a calendar application.

At 416, the computing device displays the user interface for the communication application. For example, the display component 118 can display the user interface 126 associated with the communication application 124. The user interface 126 can include the user data and selectable controls 134.

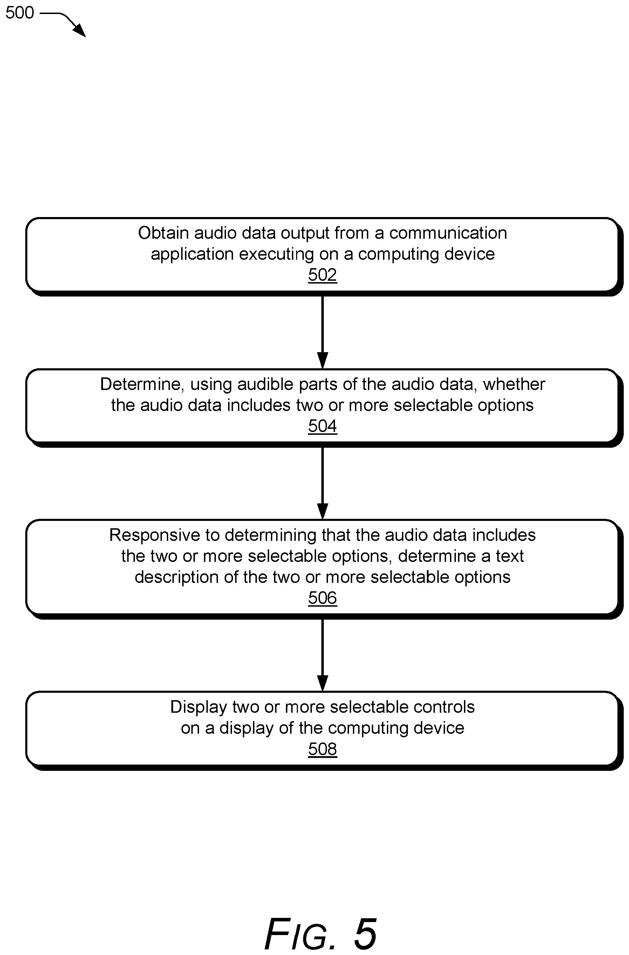

FIG. 5 illustrates example operations 500 to provide selectable controls for IVR systems. The operations 500 are described in the context of the computing device 202 of FIG. 2. The operations 500 may be performed in a different order or with additional or fewer operations.

At 502, a computing device obtains audio data output from a communication application executing on the computing device. The audio data includes audible parts of a voice call or a video call between a user of the computing device and a third party. For example, the audio mixer 208 of the computing device 202 can obtain audio data 304 output from the communication application 124 executing on the computing device 202. The caption module 210 can receive the audio data 304 from the audio mixer 208. The audio data 304 includes audible parts of a voice call or a video call between a user of the computing device 202 and a third party *(e.g.,* a person, a computerized IVR system).

At 504, the computing device determines, using the audible parts, whether the audio data includes two or more selectable options. The third party audibly provides the two or more selectable options during the voice call or the video call. For example, the machine-learned model 302 of the caption module 210 can determine, using the audible parts of the audio data 304, whether the audio data 304 includes two or more selectable options (e.g., numbered options of an IVR menu or phone tree). The third party audibly provides the two or more selectable options during the voice call or the video call.

At 506, responsive to determining that the audio data includes the two or more selectable options, the computing device determines a text description of the two or more selectable options. The text description provides a transcription of at least a portion of the two or more selectable options. For example, responsive to determining that the audio data 304 includes the two or more selectable options, the machine-learned model 302 determines a text description 306 of the two or more selectable options. The text description 306 provides a transcription of at least a portion of the two or more selectable options. In some implementations, the text description 306 includes a word-for-word transcription of the two or more selectable options. In other implementations, the text description 306 provides a paraphrasing of the two or more selectable options.

At 508, the computing device displays two or more selectable controls. The two or more selectable controls are selectable by the user to indicate the third party a selected option of the two or more selectable options. Each of the two or more selectable controls provides the text description of a respective selectable option. For example, the display component 118 displays two or more selectable controls 134 on the display of the computing device 202. The display includes the user interface 126. The two or more selectable controls 134 are selectable by the user to provide an indication to the third party of a selected option of the two or more selectable options. Each of the two or more selectable controls provide the text description 306 of a respective selectable option.

### EXAMPLE IMPLEMENTATIONS

This section illustrates example implementations of the described systems and techniques that can assist users with voice calls and video calls, which may operate separately or together in whole or in part. This section describes various example implementations, each outlined in relation to a specific drawing for ease of reading.

FIGs. 6A-6D illustrate example user interfaces of a computing device to assist users with voice calls and video calls. FIGs. 6A-6D are described in succession and the context of the computing device 202 of FIG. 2. The computing device 202 may provide different user interfaces with fewer or additional features than those illustrated in FIGs. 6A-6D.

In FIG. 6A, the computing device 202 causes the display component 118 to display the user interface 126. The user interface 126 is associated with the communication application 124. The user interface 126 includes the caller box 128, the numeric-keypad icon 130, the speakerphone icon 132, the selectable controls 134, and the end-call icon 136.

Consider that the user has called a new medical provider Doctor Office. In this implementation, the user has placed a voice call using the communication application 124. In other implementations, the user can place a video call using the communication application 124 or another application on the computing device 202. The caller box 128 indicates the business name *(e.g.,* Doctor Office) and telephone number *(e.g.,* (111) 555-1234) of the third party. The Doctor Office uses the IVR system 110 to provide a menu of selectable options audibly. The IVR system 110 can direct callers to appropriate personnel and staff at the Doctor Office. Consider that the IVR system 110 provides the following dialogue upon answering the voice call: "Thank you for calling Doctor Office. Please listen to the following options and choose the option that best matches the purpose of your call today. For prescription refills, please press 1. To schedule an appointment, please press 2. For billing, please press 3. To speak to a nurse, please press 4."

As the IVR system 110 audibly provides the selectable options, the caption module 210 obtains the audio data 304 output from the communication application 124. As described above, the audio mixer 208 can send the audio data 304 to the caption module 210. The caption module 210 then determines that the audio data 304 includes multiple selectable options. In response to this determination, the caption module 210 determines a text description 306 of the selectable options. For example, the machine-learned model 302 can transcribe at least a portion of the selectable options. The transcription can be a word-for-word transcription or paraphrasing of each of the selectable options.

The caption module 210 then causes the display component 118 to display the selectable controls 134 on the user interface 126. The selectable controls 134 include a selectable control associated with each of the selectable options provided by the IVR system 110: a first selectable control 134-1, a second selectable control 134-2, a third selectable control 134-3, and a fourth selectable control 134-4. The selectable controls 134 include the text description 306 associated with a respective selectable option. For example, the first selectable control 134-1 includes the text "1 - Prescription refills." The number "1" indicates that the first selectable control 134-1 is associated with the first selectable option provided by the IVR system 110. The second selectable control 134-2 provides the text "2 - Schedule an appointment." The third selectable control 134-3 displays the text "3 - Billing." And the fourth selectable control 134-4 includes the text "4 - Speak with a nurse." In some implementations, the selectable controls 134 can omit the numbers associated with each selectable option.

As described above, the selectable controls 134 can be presented in various forms on the user interface 126. For example, the selectable controls 134 can be buttons, toggles, selectable text, sliders, checkboxes, or icons. The user can select a selectable control 134 to cause the computing device 202 to indicate to the IVR system 110 the selected option of the multiple selectable options.

In response to IVR system 110 providing the selectable options, the user can select the numeric-keypad icon 130 to display a numeric keypad and select a number associated with the desired selectable option. For example, the user can select the number "2" in the numeric keypad to schedule an appointment. In response, the computing device 202 can send a DTMF tone to the IVR system 110. In other implementations, the IVR system 110 may allow the user to provide the selected option by audibly saying the number "2." The described systems and techniques also allow the user to select the selectable control 134 associated with the desired option. In this example, the user selects the second selectable control 134-2 to schedule a new appointment. In response to the user selecting the second selectable control 134-2, the input component 120 causes the computing device 202 to send a DTMF tone associated with the number "2" or audible communication of the number "2" to the IVR system 110. In this way, the described systems and techniques help the user navigate the selectable IVR menu options and select the desired option.

In some implementations, the computing device 202 can provide a series of selectable controls 134 in response to different levels of IVR menus. The computing device 202 can update the selectable controls 134 to correspond to the current selectable options. In other implementations, the computing device 202 can provide an option to display a previous menu of selectable options from earlier in the voice call or video call.

FIG. 6B is an example of the user interface 126 in response to a request for user information. In response to the user selecting the second selectable control 134-2 in the previous scenario, the IVR system 110 directs the user to a receptionist at the Doctor Office. Because the user is a new patient, the receptionist may ask a series of questions to set up an account or profile associated with the user. For example, the receptionist may request medical insurance information for the user. In this situation, the audio data 304 may include the following question: "Do you have medical insurance?" The machine-learned model 302 can determine, using audible parts of the voice call with the Doctor Office, whether the audio data 304 includes a request for user information. In this example, the machine-learned model 302 can use the words "medical insurance," along with other parts of the conversation and the context that the third party is a medical office, to determine that the audio data 304 includes a request for user information.

The machine-learned model 302 can determine the text description 306 of the request for user information in response. In this example, the machine-learned model 302 or the caption module 210 determines the text description 306 includes "medical insurance." The caption module 210 or the computing device 202 can then identify user data responsive to the request for medical insurance information in the CRM 206 and cause the display component 118 to display it on the user interface 126. In this example, the user data can include the insurance provider, the policy number, or the account identifier. The computing device 202 can also retrieve the medical insurance information from an email in an email application or profile information stored in a contacts application. In some implementations, the computing device 202 can store and retrieve sensitive user data from a secure enclave of the CRM 206 or other memory in the computing device 202.

The display component 118 can display the user data *(e.g.,* insurance provider and policy number) in a message element 600 on the user interface 126. The message element 600 can be an icon, notification, message box, or similar user interface element to display textual information. The message element 600 can also include the text description 306 of the request for user information to provide context. In this example, the message element 600 provides the following text: "Your insurance provider: Apex Medical Insurance Co." and "Your policy number: 123456789-0." In the depicted implementation, the message element 600 provides both sets of user data in a single message element 600. In other implementations, the display component 118 can include the user data in multiple message elements 604.

The display component 118 displays the message element 600 on the user interface 126 shortly after the receptionist asks the question. In some implementations, the computing device 202 can determine from the audio data 304 that the user is a new patient at the Doctor Office. In response to this context, the machine-learned model 302 or the caption module 210 can anticipate that the receptionist will ask for medical insurance information and retrieve this user data. In other implementations, the machine-learned model 302 or the caption module 210 can anticipate that the medical insurance information may be requested when the user calls a medical office. In such situations, the medical insurance information can be displayed in response to a request for this information.

The computing device 202 can use the sensors 214 to determine the context of the computing device 202. In response to determining that the user is not looking at the display, the computing device 202 can cause the audio component 116 to provide an audio signal or haptic feedback. The audio signal can alert the user that user data related to a user information request is displayed. For example, if the computing device 202 determines that the user is holding the computing device 202 to her ear (e.g., by using a proximity sensor, gyroscope, or accelerometer), the computing device 202 can cause the audio component 116 to provide an audio signal (e.g., a soft tone) that only the user can hear. In other implementations, the computing device 202 can provide haptic feedback to the user as an alert.

In response to reading the message element 600 with the medical insurance information, the user can audibly provide this information to the receptionist. In some situations, the user may be in a public setting and may not want to provide the user data audibly. As a result, the user can select one of several selectable controls 134. The display component 118 displays a fifth selectable control 134-5 and a sixth selectable control 134-6. The fifth selectable control 134-5 includes the following text: "Read my insurance provider." The sixth selectable control 134-6 includes the following text: "Read my policy number." In response to the user selecting one of the selectable controls 134, the computing device 202 causes the audio mixer 208 to audibly read the respective user data to the receptionist without requiring the user to provide this information audibly. In other implementations, the computing device 202 can give the user additional selectable controls 134 to email, text, or otherwise send the user data *(e.g.,* the medical insurance information) to the receptionist. In this way, the described techniques and systems provide a secure and private way to share sensitive user data with another person or entity during voice calls and video calls.

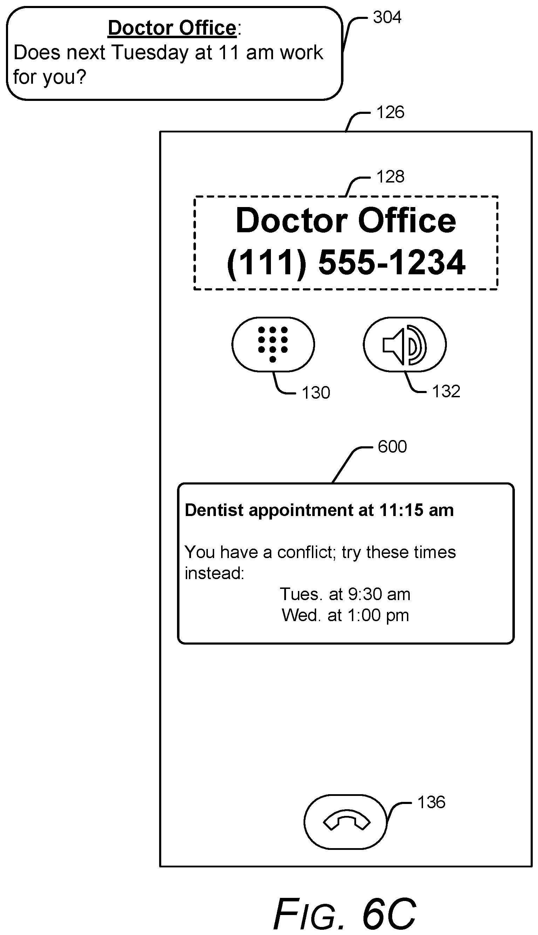

In FIG. 6C, the computing device 202 provides user data in response to a proposed appointment time. Consider the previous voice call to the Doctor Office. After the user provides her medical insurance information, the receptionist suggests an appointment at 11 am on Tuesday. For example, the audio data 304 includes the following question from the receptionist: "Does next Tuesday at 11 am work for you?" In response to the proposed time, the computing device 202 can check user calendar information in a calendar application and identify a potential conflict. In this example, the user has a dentist appointment scheduled at 11:15 am on Tuesday. The computing device 202 causes the display component 118 to display this information in the message element 600. For example, the display component 118 can display the following text: "Dentist appointment at 11:15 am." In some implementations, the computing device 202 can also automatically suggest alternative times based on the user calendar information. The display component 118 can display the following text: "You have a conflict, try these times instead: Tues. at 9:30 am [or] Wed. at 1:00 pm." In this way, the computing device 202 helps the user schedule a new appointment at the Doctor Office. The user must not recall the previously-scheduled dentist appointment or open the calendar application on the computing device 202 while talking to the receptionist. The user can also avoid calling the Doctor Office back to reschedule the appointment after recalling the conflict.

In FIG. 6D, the computing device 202 displays communicated information related to the voice call. Consider the previous voice call to the Doctor Office. The receptionist had an appointment slot available at 1 pm on Wednesday and confirmed the appointment by saying: "We have you scheduled for an appointment at 1 pm on Wednesday, November 4." In response, the computing device 202 can cause the display component 118 to display the details of the appointment in the message element 600: For example, the message element 600 can provide the following communicated information: "Wednesday, Nov. 4, 2020 at 1 pm, Medical Appointment @ Doctor Office."

The computing device 202 can also provide the user with several selectable controls related to the communicated information, including a seventh selectable control 134-7 and an eighth selectable control 134-8. In this example, the seventh selectable control 134-7 displays the text "Save to Calendar." When selected, the seventh selectable control 134-7 causes the computing device 202 to save the appointment information to the calendar application. The eighth selectable control 134-8 displays the text "Send to Spouse." When selected, the eighth selectable control 134-8 causes the computing device 202 to send the appointment information to the spouse. The user can also cause the computing device 202 to save the appointment information to the calendar application via audible commands.

The computing device 202 can cause the display component 118 to leave the message element 600 and the selectable controls 134 related to the appointment on the user interface 126 until the termination of the voice call and for several minutes after that. In other implementations, the user can retrieve this information, including the message element 600 and the selectable controls, by selecting the conversation with the Doctor Office in a history menu of the communication application 124. In this way, the user can save communicated information from a voice call or a video call without writing down the appointment, recalling the appointment later, or separately entering the appointment into the calendar application. The features and functionality described with respect to FIGs. 6A-6D allow the computing device 202 to provide a more user-friendly experience for voice calls and video calls.

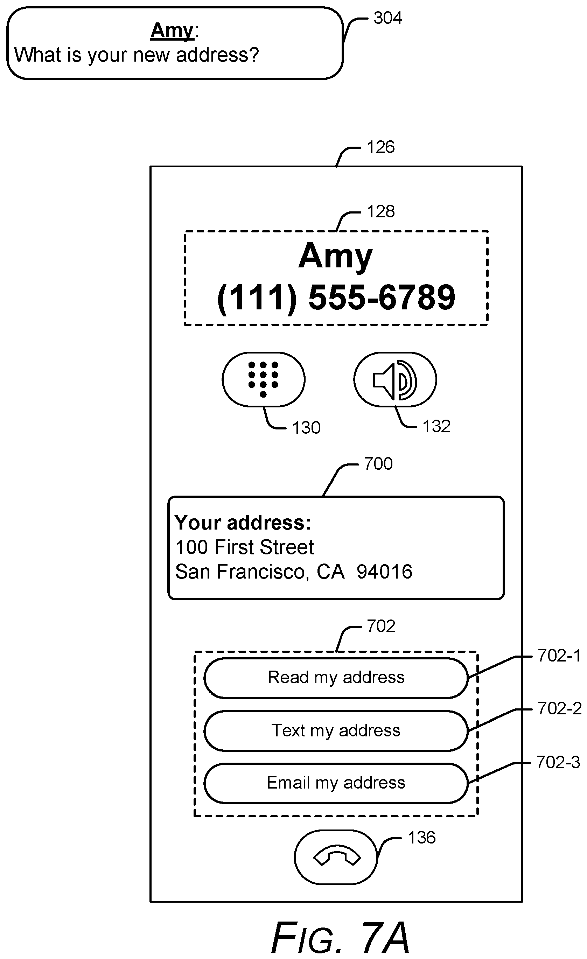

FIGs. 7A-7C illustrate other example user interfaces of a computing device to assist users with voice calls and video calls. FIGs. 7A-7C are described in succession and the context of the computing device 202. The computing device 202 may provide different user interfaces with fewer or additional features than those illustrated in FIGs. 7A-7C.

In FIG. 7A, the computing device 202 causes the display component to display the user interface 126. Consider that the user has placed a voice call using the communication application 124 to her friend Amy. The caller box 128 provides Amy's name and telephone number (e.g., (111) 555-6789). During the voice call, Amy asks the user for her new address. As illustrated in FIG. 7A, the audio data 304 includes the following phrase: "What is your new address?"

In response to determining that the audio data 304 includes a request for user information (e.g., the user address), the computing device 202 determines a description of the request. In this example, the caption module 210 determines the text description 306 of the request includes the user's home address. The computing device 202 finds the home address in the CRM 206 and displays it on the user interface 126. For example, the display component 118 can cause a message element 700 to provide the text description 306 and the responsive user data. The message element 700 provides the following information: "Your address: 100 First Street, San Francisco, CA 94016." In most situations, the user likely recalls this user data but may need help recalling specific details (*e.g.*, the zip code).

The computing device 202 can also cause the display component 118 to display selectable controls 702. The user can audibly provide her home address to Amy. In some situations, the user may be in a public setting and may not want to provide her address audibly. As a result, the user can select one of the selectable controls 702. In this example, the selectable controls 702 include a first selectable control 702-1, a second selectable control 702-2, and a third selectable control 702-3. The first selectable control 702-1 includes the following text: "Read my address." When selected, the first selectable control 702-1 causes the audio mixer 208 to audibly read the home address to Amy without requiring the user to provide this information audibly. The second selectable control 702-2 includes the following text: "Text my address." When selected, the second selectable control 702-2 causes the communication application 124 or another application to send, using the communication units 116, a text message to Amy with the home address. The third selectable control 702-3 includes the following text: "Email my address." The third selectable control 702-3 causes an email application to send an email to Amy with the home address when selected. The computing device 202 can obtain the email address for Amy from a contact application. In this way, the computing device 202 provides the user with a safe way to share sensitive user data on a voice call or a video call without audibly broadcasting it to nearby individuals.

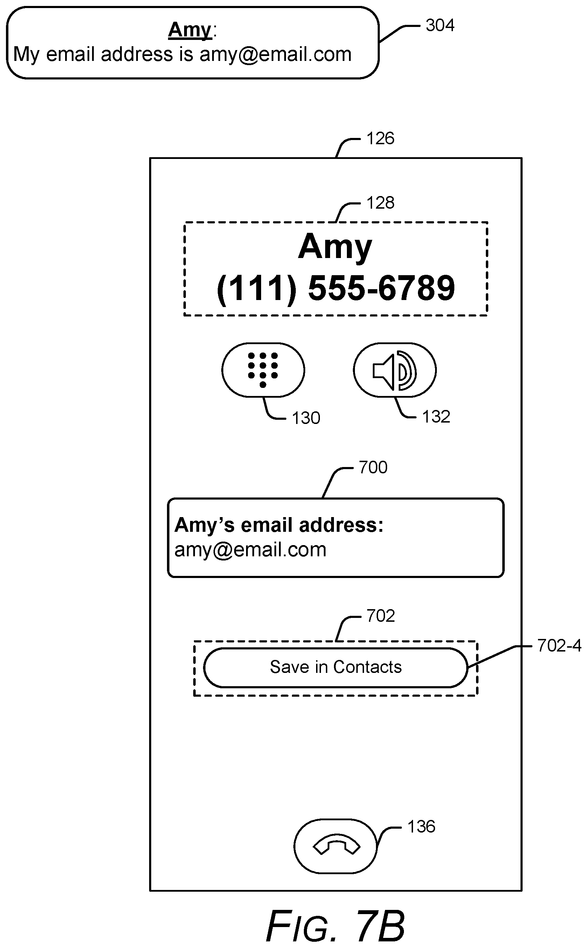

In FIG. 7B, the computing device 202 displays communicated information related to the voice call. Consider the previous voice call with Amy and that Amy provides new contact information (e.g., her new work email address). In response, the computing device 202 provides the communication information to the user. The caption module 210 determines that the audio data 304 includes Amy providing her new email address: "My email address is amy@email.com." The display component 118 then displays the new email address in the message element 702. The message element provides the following text: "Amy's email address: amy@email.com."

In some implementations, the computing device 202 can verify that the new email address is not saved on the computing device 202 *(e.g.,* in a contacts application or an email application). If the new email address is saved, then the computing device 202 may cause the caption module 210 not to display this communicated information. If the new email address is not saved, then the computing device 202 may cause the caption module 210 to display this communicated information.

The computing device 202 can display a fourth selectable control 702-4. The fourth selectable control 702-4 includes the following text: "Save in Contacts." The fourth selectable control 702-4 causes the computing device 202 to save the email address to a contacts application when selected.

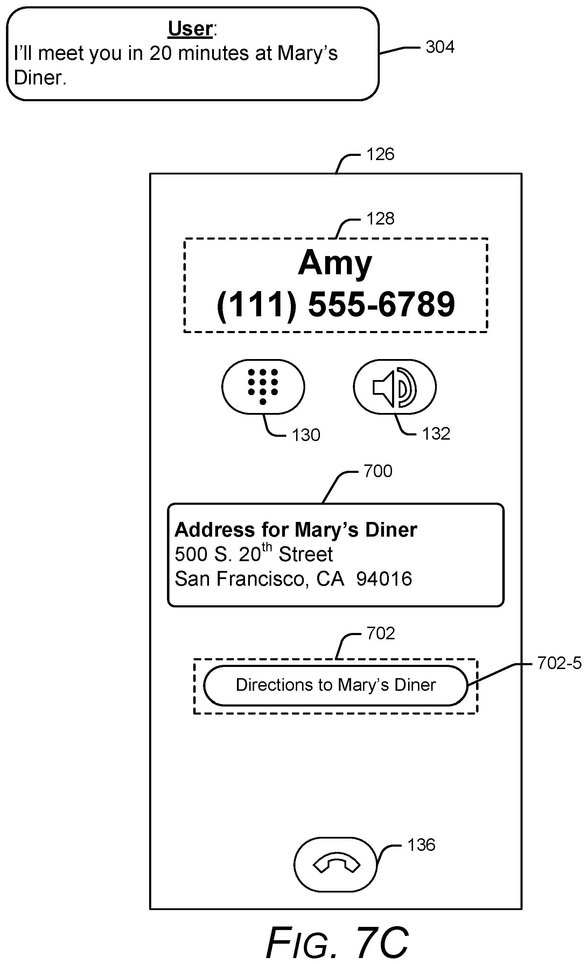

In FIG. 7C, the computing device 202 provides additional selectable controls in response to communicated information during the voice call. Consider the previous voice call with Amy and that the user and Amy agree to meet for lunch. The audio data 304 includes the following phrase audibly spoken by the user: "I'll meet you in 20 minutes at Mary's Diner." In response to this communicated information, the computing device 202 can display the address for Mary's Diner in the message element 700. The message element 702 includes the following text: "Address for Mary's Diner, 500 S. 20^{th} Street, San Francisco, CA 94016." The computing device 202 can also display a fifth selectable control 702-5. The fifth selectable control 702-5 displays the following text: "Directions to Mary's Diner." When selected, the fifth selectable control 702-5 causes the computing device 202 to initiate navigation instructions from a navigation application.

In some implementations, the fifth selectable control 702-5 can be a slice window of the navigation application that provides a subset of functionalities of the navigation application related to the communicated information. For example, the slice window for the navigation application can allow the user to select walking directions, driving directions, or public transport directions to Mary's Diner.

FIGs. 8A-8D illustrate other example user interfaces of a computing device to assist users voice calls and video calls. FIGs. 8A-8D are described in succession and the context of the computing device 202 of FIG. 2. The computing device 202 may provide different user interfaces with fewer or additional features than those illustrated in FIGs. 8A-8D.

In FIG. 8A, the computing device 202 causes the display component 118 to display the user interface 126 with a message element 800 and selectable controls 802 in response to selectable options of the IVR system 110. Consider that the user placed a voice call to a new utility provider Utility Company. The caller box 128 indicates the business name (e.g., Utility Company) and telephone number (e.g., (111) 555-2345) of the called party.

The IVR system 110 uses a voice response system that prompts callers to provide audio responses to a series of questions and statements. Consider that the audio data 304 includes the following statement: "Thank you for contacting us about becoming a new customer. Please state the type of service you are interested in." The IVR system 110 can listen for a phrase that matches or closely matches a list of offered services. For example, the Utility Company can listen for one of the following selectable options: home internet service, home telephone, or TV services. The computing device 202 can determine that the audio data 304 includes an implicit list of two or more selectable options. The display component 118 can display the following text in the message element 800: "Listed below are common responses offered by new customers." In this example, the selectable controls 802 can include a first selectable control 802-1 (*e*.*g.,* "Home Internet Service"), a second selectable control 802-2 (e.g., "Home Telephone"), and a third selectable control 802-3 (e.g., "TV Services"). The selectable controls 802 can include additional or fewer suggestions. The user can select one of the selectable controls 802, causing the audio mixer 208 to provide the selected option to the IVR system 110 audibly.

The computing device 202 can determine the potential suggestions based on the audio data 304 by deciphering the available services from audible parts of the voice call. The computing device 202 can also determine the selectable options based on data obtained from other computing devices given a similar request by the same utility provider or similar companies. In this way, the computing device 202 can help the user navigate open-ended IVR prompts and avoid ineffective responses or cause the system to restart.

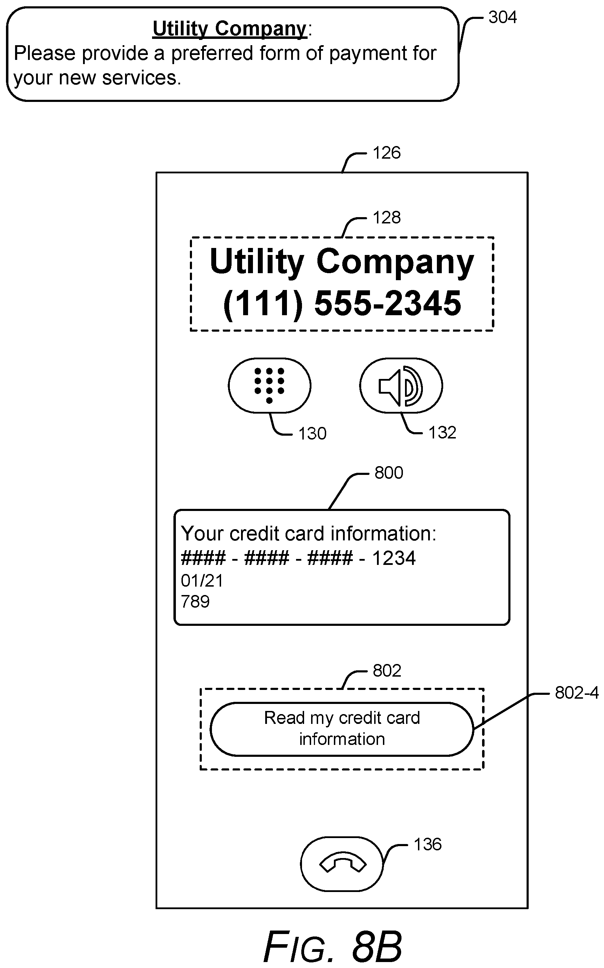

FIG. 8B is an example of the user interface 126 in response to a request for user information (e.g., payment information). In response to the user selecting home internet services, the IVR system 110 directs the user to an account specialist to set up a new account and initiate home internet services. Because the user is a new account holder, the account specialist collects payment information, including a credit card number, to set up the account. For example, the audio data 304 may include the following request from the specialist: "Please provide a preferred form of payment for your new services." In response to determining that the audio data 304 includes a request for user information, the computing device 202 determines a text description 306 of the request. In this example, the caption module 210 determines the text description 306 asks for credit card information. The computing device 202 identifies the credit card information in the CRM 206 and displays the user data on the user interface 126. The response element 800 includes the following information: "Your credit card information: #### - #### - #### - 1234, [Expiration date:] 01/21, and [PIN] 789."

The computing device 202 can also determine whether the user data includes sensitive information. In response to determining that a portion of the user data is sensitive information, the computing device 202 can obscure a portion of the sensitive information (e.g., replacing at least some digits of the credit card number with a different symbol, including "#" or "*" or omitting them). In this way, the computing device 202 can maintain secrecy of the sensitive information and obscure it from other persons.

The display component 118 can display a selectable control 802 to maintain the secrecy of the user data. In this example, the display component 118 displays a fourth selectable control 802-4 that includes the following text: "Read my credit card information." When selected, the fourth selectable control 802-4 causes the computing device 202 to audibly read the complete credit card number, expiration date, and PIN to the account specialist. In this way, the computing device 202 provides a secure way for the user to share sensitive credit card information with the account specialist.

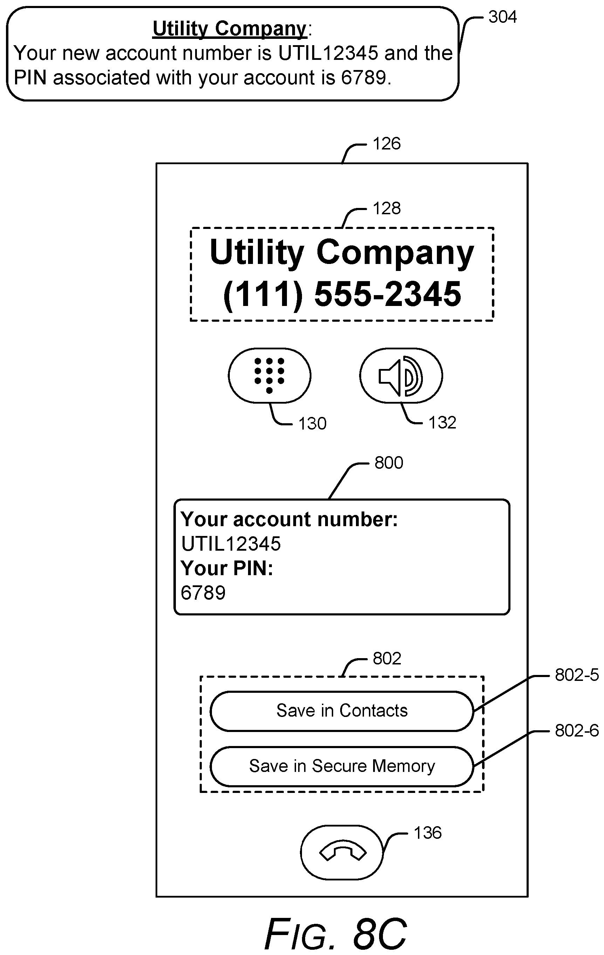

In FIG. 8C, the computing device 202 displays communicated information related to the voice call. Consider the previous voice call to the Utility Company. The account specialist provides account information (e.g., an account number and personal identification number (PIN)) to the user. In this situation, the audio data 304 includes the following statement: "Your new account number is UTIL12345, and the PIN associated with your account is 6789." In response, the computing device 202 displays the account number and PIN in the message element 800. Specifically, the message element 802 displays: "Your account number: UTIL12345, Your PIN: 6789." The computing device 202 can provide the user with a fifth selectable control 802-5 and a sixth selectable control 802-6. The fifth selectable control 802-5 includes the following text: "Save in Contacts." When selected, the fifth selectable control 802-5 causes the computing device 202 to save the account number and PIN to a contacts application. The sixth selectable control 802-6 includes the following text: "Save in Secure Memory." When selected, the sixth selectable control 802-6 causes the computing device 202 to save the account number and PIN to a secure memory that requires special privileges by an application or a user to access.

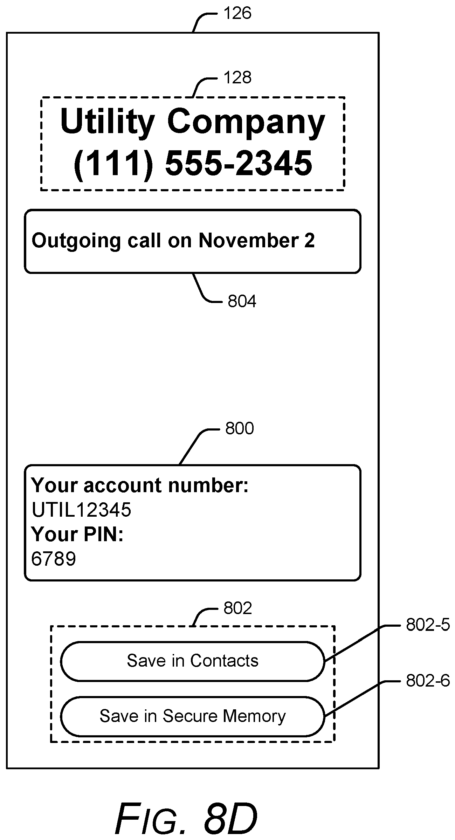

In FIG. 8D, the computing device 202 displays communicated information related to a previous voice call. Consider the previous voice call to the Utility Company. In this example, the user could not review the communicated information displayed on the user interface during or shortly after the voice call. The computing device 202 can store the message element 802, the fifth selectable control 802-5, the sixth selectable control 802-6, or a combination thereof related to the voice call. In this way, the user can access the text description 306 of the communication information later.

The call history can provide a user interface 126 associated with each voice call or video call. For example, the user interface 126 associated with the history of the voice call with the Utility Company can include a history element 804. The history element 804 can include historical information about the voice call, including the following text: "Outgoing call on November 2."

In some situations, the user may need to make another voice call or video call immediately after the termination of the voice call with the Utility Company or may need to perform another functionality on the computing device 202. The computing device 202 can store the message elements 800 and the selectable controls 802 associated with each voice call or video call in memory associated with the communication application 124. The communication application 124 can include a call history. In this way, the user can retrieve the message element 800 and the selectable controls 802 related to a voice call or video call later when convenient.

### CONCLUSION

While various configurations and methods to provide selectable controls on a computing device for IVR systems have been described in language specific to features and/or methods, it is to be understood that the subject of the appended claims is not necessarily limited to the specific features or methods described. Rather, the specific features and methods are disclosed as non-limiting examples for providing selectable controls on a computing device for IVR systems. Further, although various examples have been described above, with each example having certain features, it should be understood that it is not necessary for a particular feature of one example to be used exclusively with that example. Instead, any of the features described above and/or depicted in the drawings can be combined with any of the examples, in addition to or in substitution for any of the other features of those examples.

## Claims

1. A method (400, 500) comprising:
obtaining (406, 502), by a computing device (102, 202), audio data output from a communication application (124) executing on the computing device, the audio data comprising audible parts of a voice call or a video call between a user of the computing device and a third party;
determining (408, 504), by the computing device and using the audible parts, whether the audio data includes two or more selectable options, the two or more selectable options audibly provided by the third party during the voice call or the video call;
responsive to determining that the audio data includes the two or more selectable options, determining (410, 506), by the computing device, a text description of the two or more selectable options, the text description providing a transcription of at least a portion of the two or more selectable options;
displaying (414, 508), during the voice call or the video call, two or more selectable controls (134) on a display (118) of the computing device, the two or more selectable controls configured to be selectable by the user to provide an indication to the third party of a selected option of the two or more selectable options, each of the two or more selectable controls providing the text description of a respective selectable option;
receiving a selection of one selectable control of the two or more selectable controls associated with the selected option, the selection made by the user during the voice call or the video call;
responsive to receiving the selection of the one selectable control, communicating, by the computing device, the selected option to the third party, **characterized by**
responsive to communicating the selected option to the third party, obtaining, by the computing device, additional audio data output from the communication application, the additional audio data including two or more additional selectable options audibly provided by the third party during the voice call or the video call in response to the selected option;
responsive to determining, by the computing device, that the additional audio data includes the two or more additional selectable options, determining, by the computing device, a text description of the two or more additional selectable options, the text description providing a transcription of at least a portion of the two or more additional selectable options;
displaying, during the voice call or the video call, two or more additional selectable controls on the display of the computing device, the two or more additional selectable controls configured to be selectable by the user to provide an indication to the third party of a selected option of the two or more additional selectable options, each of the two or more additional selectable controls providing the text description of a respective additional selectable option;
receiving a selection of one additional selectable control of the two or more additional selectable controls associated with the additional selected option, the selection made by the user during the voice call or the video call; and
responsive to receiving the selection of the one additional selectable control, communicating, by the computing device, the additional selected option to the third party.

2. The method of claim 1, wherein communicating the selected option to the third party comprises sending, by the computing device, an audio response or a dual-tone multi-frequency, DTMF, tone to the third party without the user audibly communicating the selected option.

3. The method of any preceding claim, the method further comprising:
determining, by the computing device and using the audible parts, whether the audio data includes a request for user information, the request for user information audibly provided by the third party during the voice call or the video call;
identifying (412), by the computing device and using the audible parts, user data responsive to the request for user information; and
displaying (414), by the computing device, the user data on the display or providing, by the computing device, the user data to the third party during the voice call or the video call.

4. The method of any preceding claim, the method further comprising:
determining, by the computing device and using the audible parts, whether the audio data includes communicated information, the communicated information related to a context of the voice call or the video call and audibly provided by the third party or the user during the voice call or the video call;
responsive to determining that the audio data includes the communicated information, determining, by the computing device, a text description of the communicated information, the text description of the communicated information providing a transcription of at least a portion of the communicated information; and
displaying another selectable control on the display, the other selectable control providing the text description of the communicated information and configured to be selectable by the user to save the communicated information in at least one of the computing device, the application, or another application on the computing device.

5. The method of any preceding claim, wherein determining the text description of the two or more selectable options comprises executing, by the computing device, a machine-learned model to determine the text description of the two or more selectable options, the machine-learned model trained to determine text descriptions from the audio data, the audio data received from an audio mixer of the computing device.

6. The method of claim 5, wherein the machine-learned model comprises an end-to-end Recurrent-Neural-Network-Transducer Automatic Speech Recognition Model.

7. The method of any preceding claim, wherein the two or more selectable options are a menu representing options of an interactive voice response, IVR, system or a voice response unit, VRU, system, the IVR system or VRU system configured to interact with the user and direct the user to at least one of another menu of the IVR system or VRU system, personnel associated with the third party, departments associated with the third party, services associated with the third party, or information associated with the third party.

8. The method of any preceding claim, wherein the two or more selectable controls comprise at least one of buttons, toggles, selectable text, sliders, checkboxes, or icons and are included in a user interface of the communication application.

9. The method of any preceding claim, wherein the text description of the two or more selectable options includes a number associated with each of the two or more selectable options and wherein each of the selectable controls includes a visual representation of the number associated with each of the two or more selectable options.

10. The method of any preceding claim, wherein the display of the computing device comprises a touch-sensitive screen and wherein the selectable controls are presented on the touch-sensitive screen.

11. The method of any preceding claim, wherein the computing device comprises a smartphone, a computerized watch, a tablet device, a wearable device, or a laptop computer.

12. A computing device (102, 202) comprising at least one processor (204) configured to perform the method of any one of claims 1 to 11.

13. A computer-readable storage medium (206) comprising instructions that, when executed, configure a processor (204) of a computing device (102, 202) to perform the method of any one of claims 1 to 11.

14. A computer program product comprising instructions that, when executed, configure a processor of a computing device to perform the method of any one of claims 1 to 11.

## Patentansprüche

1. Verfahren (400, 500), umfassend:
Erfassen (406, 502) von Audiodaten, die von einer auf dem Rechnergerät (102, 202) ausgeführten Kommunikationsanwendung (124) ausgegeben werden, wobei die Audiodaten hörbare Teile eines Sprach- oder Videoanrufs zwischen einem Benutzer des Rechnergeräts und einem Dritten umfassen;
Bestimmen (408, 504) durch das Rechnergerät unter Verwendung der hörbaren Teile, ob die Audiodaten zwei oder mehr auswählbare Optionen umfassen, wobei die zwei oder mehr auswählbaren Optionen während des Sprach- oder Videoanrufs von dem Dritten hörbar bereitgestellt werden;
als Reaktion auf das Bestimmen, dass die Audiodaten die zwei oder mehr auswählbaren Optionen umfassen, Bestimmen (410, 506) durch das Rechnergerät einer Textbeschreibung der zwei oder mehr auswählbaren Optionen, wobei die Textbeschreibung eine Transkription von zumindest einem Teil der zwei oder mehr auswählbaren Optionen bereitstellt;
Anzeigen (414, 508) von zwei oder mehr auswählbaren Steuerelementen (134) auf einem Display (118) des Rechnergeräts während des Sprach- oder Videoanrufs, wobei die zwei oder mehr auswählbaren Steuerelemente derart ausgebildet sind, dass sie vom Benutzer ausgewählt werden können, um dem Dritten einen Hinweis auf eine ausgewählte Option der zwei oder mehr auswählbaren Optionen bereitzustellen, wobei jedes der zwei oder mehr auswählbaren Steuerelemente die Textbeschreibung einer jeweiligen auswählbaren Option bereitstellt;
Empfangen einer Auswahl eines auswählbaren Steuerelements der zwei oder mehr auswählbaren Steuerelemente, das mit der ausgewählten Option verknüpft ist, wobei die Auswahl durch den Benutzer während des Sprach- oder Videoanrufs erfolgt;
als Reaktion auf das Empfangen der Auswahl des einen auswählbaren Steuerelements Übermitteln der ausgewählten Option an den Dritten durch das Rechnergerät, **dadurch gekennzeichnet, dass**
als Reaktion auf das Übermitteln der ausgewählten Option an den Dritten Erhalten zusätzlicher Audiodaten durch das Rechnergerät, wobei die zusätzlichen Audiodaten zwei oder mehr zusätzliche auswählbare Optionen umfassen, die vom Dritten während des Sprach- oder Videoanrufs als Antwort auf die ausgewählte Option hörbar bereitgestellt werden;
als Reaktion auf das Bestimmen durch das Rechnergerät, dass die zusätzlichen Audiodaten die zwei oder mehr zusätzlichen auswählbaren Optionen umfassen, Bestimmen einer Textbeschreibung der zwei oder mehr zusätzlichen auswählbaren Optionen durch das Rechnergerät, wobei die Textbeschreibung eine Transkription von zumindest einem Teil der zwei oder mehr zusätzlichen auswählbaren Optionen bereitstellt;
Anzeigen, während des Sprach- oder Videoanrufs, von zwei oder mehr zusätzlichen auswählbaren Steuerelementen auf dem Display des Rechnergeräts, wobei die zwei oder mehr zusätzlichen auswählbaren Steuerelemente derart ausgebildet sind, dass sie vom Benutzer ausgewählt werden können, um dem Dritten einen Hinweis auf eine ausgewählte Option der zwei oder mehr zusätzlichen auswählbaren Optionen bereitzustellen, wobei jedes der zwei oder mehr zusätzlichen auswählbaren Steuerelemente die Textbeschreibung einer jeweiligen zusätzlichen auswählbaren Option bereitstellt;
Empfangen einer Auswahl eines zusätzlichen auswählbaren Steuerelements der zwei oder mehr zusätzlichen auswählbaren Steuerelemente, das mit der ausgewählten zusätzlichen Option verknüpft ist, wobei die Auswahl durch den Benutzer während des Sprach- oder Videoanrufs erfolgt; und
als Reaktion auf das Empfangen der Auswahl des einen zusätzlichen auswählbaren Steuerelements Übermitteln der ausgewählten zusätzlichen Option an den Dritten durch das Rechnergerät.

2. Verfahren nach Anspruch 1, wobei das Übermitteln der ausgewählten Option an den Dritten ein Senden einer Audioantwort oder eines Zweiton-Mehrfrequenz-, DTMF-, Tons durch das Rechnergerät an den Dritten umfasst, ohne dass der Benutzer die ausgewählte Option hörbar kommuniziert.

3. Verfahren nach einem der vorhergehenden Ansprüche, ferner umfassend:
Bestimmen durch das Rechnergerät unter Verwendung der hörbaren Teile, ob die Audiodaten eine Anforderung von Benutzerinformationen umfassen, wobei die Anforderung von Benutzerinformationen während des Sprach- oder Videoanrufs von dem Dritten hörbar bereitgestellt wird;
Identifizieren (412) von Benutzerdaten durch das Rechnergerät unter Verwendung der hörbaren Teile als Reaktion auf die Anforderung von Benutzerinformationen; und
Anzeigen (414) der Benutzerdaten auf dem Display durch das Rechnergerät oder Bereitstellen der Benutzerdaten an den Dritten durch das Rechnergerät während des Sprach- oder Videoanrufs.

4. Verfahren nach einem der vorhergehenden Ansprüche, ferner umfassend:
Bestimmen durch das Rechnergerät unter Verwendung der hörbaren Teile, ob die Audiodaten mitgeteilte Informationen umfassen, wobei die mitgeteilten Informationen einen Kontext des Sprach- oder Videoanrufs betreffen und während des Sprach- oder Videoanrufs vom Dritten oder dem Benutzer hörbar bereitgestellt werden;
als Reaktion auf das Bestimmen, dass die Audiodaten die mitgeteilten Informationen umfassen, Bestimmen einer Textbeschreibung der mitgeteilten Informationen durch das Rechnergerät, wobei die Textbeschreibung eine Transkription von zumindest einem Teil der mitgeteilten Informationen bereitstellt; und
Anzeigen eines weiteren auswählbaren Steuerelements auf dem Display, wobei das weitere auswählbare Steuerelement die Textbeschreibung der mitgeteilten Informationen bereitstellt und derart ausgebildet ist, dass es vom Benutzer ausgewählt werden kann, um die mitgeteilten Informationen in zumindest einem des Rechnergeräts, der Anwendung oder einer anderen Anwendung auf dem Rechnergerät zu speichern.

5. Verfahren nach einem der vorhergehenden Ansprüche, wobei das Bestimmen der Textbeschreibung der zwei oder mehr auswählbaren Optionen ein Ausführen eines maschinell erlernten Modells durch das Rechnergerät umfasst, um die Textbeschreibung der zwei oder mehr auswählbaren Optionen zu bestimmen, wobei das maschinell erlernte Modell darauf trainiert ist, Textbeschreibungen aus den Audiodaten zu bestimmen, wobei die Audiodaten von einem Audiomischer des Rechnergeräts empfangen werden.

6. Verfahren nach Anspruch 5, wobei das maschinell erlernte Modell ein End-to-End-Recurrent-Neural-Network-Transducer-Automatic-Speech-Recognition-Modell umfasst.

7. Verfahren nach einem der vorhergehenden Ansprüche, wobei die zwei oder mehr auswählbaren Optionen ein Menü darstellen, das Optionen eines interaktiven Sprachdialog-, IVR-, Systems oder eines Sprachdialogeinheiten-, VRU-, Systems umfasst, wobei das IVR-System oder VRU-System dazu eingerichtet ist, mit dem Benutzer zu interagieren und den Benutzer zu zumindest einem weiteren Menü des IVR- oder VRU-Systems, zu Personal des Dritten, zu Abteilungen des Dritten, zu Diensten des Dritten oder zu Informationen des Dritten zu führen.

8. Verfahren nach einem der vorhergehenden Ansprüche, wobei die zwei oder mehr auswählbaren Steuerelemente zumindest eines aus folgenden Elementen umfassen: Schaltflächen, Umschalter, auswählbarer Text, Schieberegler, Ankreuzfelder oder Symbole, und in einer Benutzeroberfläche der Kommunikationsanwendung enthalten sind.

9. Verfahren nach einem der vorhergehenden Ansprüche, wobei die Textbeschreibung der zwei oder mehr auswählbaren Optionen eine Nummer umfasst, die jeder der zwei oder mehr auswählbaren Optionen zugeordnet ist, und wobei jedes der auswählbaren Steuerelemente eine visuelle Darstellung der der jeweiligen auswählbaren Option zugeordneten Nummer umfasst.

10. Verfahren nach einem der vorhergehenden Ansprüche, wobei das Display des Rechnergeräts einen berührungsempfindlichen Bildschirm umfasst und wobei die auswählbaren Steuerelemente auf dem berührungsempfindlichen Bildschirm dargestellt sind.

11. Verfahren nach einem der vorhergehenden Ansprüche, wobei das Rechnergerät ein Smartphone, eine Computeruhr, ein Tabletgerät, ein Wearable oder einen Laptopcomputer umfasst.

12. Rechnergerät (102, 202), umfassend mindestens einen Prozessor (204), der dazu eingerichtet ist, das Verfahren nach einem der Ansprüche 1 bis 11 durchzuführen.

13. Computerlesbares Speichermedium (206), umfassend Anweisungen, die, wenn sie ausgeführt werden, einen Prozessor (204) eines Rechnergeräts (102, 202) dazu einrichten, das Verfahren nach einem der Ansprüche 1 bis 11 durchzuführen.

14. Computerprogrammprodukt, umfassend Anweisungen, die, wenn sie ausgeführt werden, einen Prozessor eines Rechnergeräts dazu einrichten, das Verfahren nach einem der Ansprüche 1 bis 11 durchzuführen.

## Revendications

1. Procédé (400, 500) comprenant :
l'obtention (406, 502), par un dispositif informatique (102, 202), des données audio de sortie d'une application de communication (124) s'exécutant sur le dispositif informatique, les données audio comprenant des parties audibles d'un appel vocal ou d'un appel vidéo entre un utilisateur du dispositif informatique et une partie tierce ;
le fait de déterminer (408, 504), par le dispositif informatique et à l'aide des parties audibles, si les données audio comportent deux options sélectionnables ou plus, les deux options sélectionnables ou plus étant fournies de manière audible par la partie tierce pendant l'appel vocal ou l'appel vidéo ;
en réponse à la détermination que les données audio comportent les deux options sélectionnables ou plus, la détermination (410, 506), par le dispositif informatique, d'une description textuelle des deux options sélectionnables ou plus, la description textuelle fournissant une transcription d'au moins une partie des deux options sélectionnables ou plus ;
l'affichage (414, 508), pendant l'appel vocal ou l'appel vidéo, de deux commandes sélectionnables ou plus (134) sur un écran (118) du dispositif informatique, les deux commandes sélectionnables ou plus étant configurées pour être sélectionnables par l'utilisateur afin de fournir une indication à la tierce partie d'une option sélectionnée parmi les deux options sélectionnables ou plus, chacune des deux commandes sélectionnables ou plus fournissant la description textuelle d'une option sélectionnable respective ;
la réception de la sélection d'une commande sélectionnable parmi les deux commandes sélectionnables ou plus associées à l'option sélectionnée, la sélection étant effectuée par l'utilisateur pendant l'appel vocal ou l'appel vidéo ;
en réponse à la réception de la sélection de l'une des commandes sélectionnables, la communication, par le dispositif informatique, de l'option sélectionnée à une partie tierce, **caractérisée par**
en réponse à la communication de l'option sélectionnée à la partie tierce, l'obtention, par le dispositif informatique, des données audio supplémentaires en sortie de l'application de communication, les données audio supplémentaires comportant deux options supplémentaires sélectionnables ou plus fournies de manière audible par le partie tierce pendant l'appel vocal ou l'appel vidéo en réponse à l'option sélectionnée ;
en réponse à la détermination, par le dispositif informatique, que les données audio supplémentaires comportent les deux options sélectionnables ou plus supplémentaires, la détermination, par le dispositif informatique, d'une description textuelle des deux options sélectionnables ou plus supplémentaires, la description textuelle fournissant une transcription d'au moins une partie des deux options sélectionnables ou plus supplémentaires ;
l'affichage, pendant l'appel vocal ou l'appel vidéo, de deux commandes sélectionnables ou plus supplémentaires sur l'écran du dispositif informatique, les deux commandes sélectionnables ou plus supplémentaires étant configurées pour être sélectionnables par l'utilisateur afin de fournir une indication à la tierce partie d'une option sélectionnée parmi les deux options sélectionnables ou plus supplémentaires, chacune des deux commandes sélectionnables ou plus supplémentaires fournissant la description textuelle d'une option sélectionnable supplémentaire respective ;
la réception de la sélection d'une commande sélectionnable supplémentaire parmi les deux commandes sélectionnables ou plus supplémentaires associées à l'option sélectionnée supplémentaire, la sélection étant effectuée par l'utilisateur pendant l'appel vocal ou l'appel vidéo ; et
en réponse à la réception de la sélection de l'une des commandes sélectionnables supplémentaires, la communication, par le dispositif informatique, de l'option supplémentaire sélectionnée à la partie tierce.

2. Procédé selon la revendication 1, dans lequel la communication de l'option sélectionnée à une partie tierce comprend l'envoi, par le dispositif informatique, d'une réponse audio ou d'une tonalité DTMF (multifréquence double tonalité) à une partie tierce sans que l'utilisateur ne communique de manière audible l'option sélectionnée.

3. Procédé selon une quelconque revendication précédente, le procédé comprenant également :
le fait de déterminer, par le dispositif informatique et à l'aide des parties audibles, si les données audio comportent une demande d'informations utilisateur, la demande d'informations utilisateur étant fournie de manière audible par la partie tierce pendant l'appel vocal ou l'appel vidéo ;
l'identification (412), par le dispositif informatique et à l'aide des parties audibles, des données utilisateur en réponse à la demande d'informations utilisateur ; et
l'affichage (414), par le dispositif informatique, des données utilisateur sur l'écran ou la fourniture, par le dispositif informatique, des données utilisateur à la partie tierce pendant l'appel vocal ou l'appel vidéo.

4. Procédé selon une quelconque revendication précédente, le procédé comprenant également :
le fait de déterminer, par le dispositif informatique et à l'aide des parties audibles, si les données audio comportent des informations communiquées, les informations communiquées étant liées à un contexte de l'appel vocal ou de l'appel vidéo et fournies de manière audible par la partie tierce ou l'utilisateur pendant l'appel vocal ou l'appel vidéo ;
en réponse à la détermination que les données audio comportent des informations communiquées, la détermination, par le dispositif informatique, d'une description textuelle des informations communiquées, la description textuelle des informations communiquées fournissant une transcription d'au moins une partie des informations communiquées ; et
l'affichage d'une autre commande sélectionnable sur l'écran, l'autre commande sélectionnable fournissant la description textuelle des informations communiquées et configurée pour être sélectionnable par l'utilisateur afin d'enregistrer les informations communiquées dans au moins l'un du dispositif informatique, de l'application ou d'une autre application sur le dispositif informatique.

5. Procédé selon une quelconque revendication précédente, dans lequel la détermination de la description textuelle des deux options sélectionnables ou plus comprend l'exécution, par le dispositif informatique, d'un modèle appris par machine pour déterminer la description textuelle des deux options sélectionnables ou plus, le modèle appris par machine étant entraîné à déterminer les descriptions textuelles à partir des données audio, les données audio étant reçues d'un mélangeur audio du dispositif informatique.

6. Procédé selon la revendication 5, dans lequel le modèle appris par machine comprend un modèle de reconnaissance vocale automatique de transducteur de réseau neuronal récurrent de bout en bout.

7. Procédé selon une quelconque revendication précédente, dans lequel les deux options sélectionnables ou plus sont un menu représentant les options d'un système de réponse vocale interactive, RVI, ou d'un système d'unité de réponse vocale, URV, le système RVI ou le système URV étant configuré pour interagir avec l'utilisateur et diriger l'utilisateur vers au moins l'un d'un autre menu du système RVI ou du système URV, du personnel associé à la tierce partie, les départements étant associés à la tierce partie, les services étant associés à la tierce partie ou les informations étant associées à la tierce partie.

8. Procédé selon une quelconque revendication précédente, dans lequel les deux commandes sélectionnables ou plus comprennent au moins l'un des boutons, des interrupteurs, du texte sélectionnable, des curseurs, des cases à cocher ou des icônes et sont inclus dans une interface utilisateur de l'application de communication.

9. Procédé selon une quelconque revendication précédente, dans lequel la description textuelle des deux options sélectionnables ou plus comportent un numéro associé à chacune des deux options sélectionnables ou plus et dans lequel chacune des commandes sélectionnables comporte une représentation visuelle du numéro associé à chacune des deux options sélectionnables ou plus.

10. Procédé selon une quelconque revendication précédente, dans lequel l'écran du dispositif informatique comprend un écran tactile et dans lequel les commandes sélectionnables sont présentées sur l'écran tactile.

11. Procédé selon une quelconque revendication précédente, dans lequel le dispositif informatique comprend un smartphone, une montre informatisée, une tablette, un dispositif portable ou un ordinateur portable.

12. Dispositif informatique (102, 202) comprenant au moins un processeur (204) configuré pour réaliser le procédé selon l'une quelconque des revendications 1 à 11.

13. Support de stockage lisible par ordinateur (206) comprenant des instructions qui, lorsqu'elles sont exécutées, configurent un processeur (204) d'un dispositif informatique (102, 202) pour réaliser le procédé selon l'une quelconque des revendications 1 à 11.

14. Produit de programme informatique comprenant des instructions qui, lorsqu'elles sont exécutées, configurent un processeur d'un dispositif informatique pour réaliser le procédé selon l'une quelconque des revendications 1 à 11.
